(19) Europäisches Patentamt
European Patent Office
Office européen des brevets

(11) **EP 3 128 408 A1**

(12) **EUROPEAN PATENT APPLICATION**
published in accordance with Art. 153(4) EPC

(43) Date of publication:
**08.02.2017 Bulletin 2017/06**

(21) Application number: **15773157.1**

(22) Date of filing: **20.02.2015**

(51) Int Cl.:
*G06F 3/0488* (2013.01)   *A63F 13/2145* (2014.01)
*A63F 13/52* (2014.01)   *G06F 3/0481* (2013.01)

(86) International application number:
**PCT/JP2015/054783**

(87) International publication number:
**WO 2015/151640 (08.10.2015 Gazette 2015/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.04.2014   JP 2014078244**

(71) Applicant: **Colopl Inc.**
**Tokyo 150-6011 (JP)**

(72) Inventors:
• **BABA, Naruatsu**
**Tokyo 150-6011 (JP)**

• **KASAI, Natsuo**
**Tokyo 150-6011 (JP)**
• **FUKUDA, Daisuke**
**Tokyo 150-6011 (JP)**
• **TAGUCHI, Naoki**
**Tokyo 150-6011 (JP)**
• **MURAMATSU, Iwao**
**Tokyo 150-6011 (JP)**

(74) Representative: **Griepenstroh, Jörg**
**Bockermann Ksoll**
**Griepenstroh Osterhoff**
**Patentanwälte**
**Bergstrasse 159**
**44791 Bochum (DE)**

(54) **USER INTERFACE PROGRAM AND GAME PROGRAM**

(57)    Provided is a technology relating to a user interface capable of providing a new gaming experience. A user interface program according to the present invention is configured to display an object configured to behave as an elastic body when an operation is conducted on a touch panel, and to elastically deform the object based on the operation. For example, when a slide operation is conducted, an elastic object is displayed at a start point of the slide operation, and the elastic object is displayed so as to be stretched toward an end point of the slide operation while being elastically deformed. With this configuration, it is possible to acquire a simulated experience that makes it seem as if a smartphone having a hard casing exhibits elasticity, and to provide a new user interface.

Fig. 7

EP 3 128 408 A1

**Description**

Technical Field

The present invention relates to a user interface program. More particularly, the present invention relates to a user interface program, which is to be used for a game to be executed on a smartphone, for deforming and displaying a shape of an elastic object on a touch panel, and a game program to be used for a game configured so that an action of a character within a virtual space is controlled and displayed based on an operation conducted on a touch panel.

Background Art

As a user interface to be used for a game to be executed on a smartphone (hereinafter referred to as "smartphone game"), the related arts are disclosed in, for example, PTL 1 and PTL 2. A technology disclosed in PTL 1 is configured to display an operation button (so-called cross button, joystick, or the like) on a touch panel of the smartphone (see [Abstract] in PTL 1). A user can control a game character to move or perform some action through use of the operation button. Further, a technology disclosed in PTL 2 is configured to display, based on a drag process, a cursor that extends from a start point of dragging to an end point thereof and differs in size or shape between one end portion on a start point side and another end portion on an end point side (see [Abstract] in PTL 2).

Citation List

Patent Literature

[PTL 1] JP 2012-168931 A
[PTL 2] JP 2012-33060 A

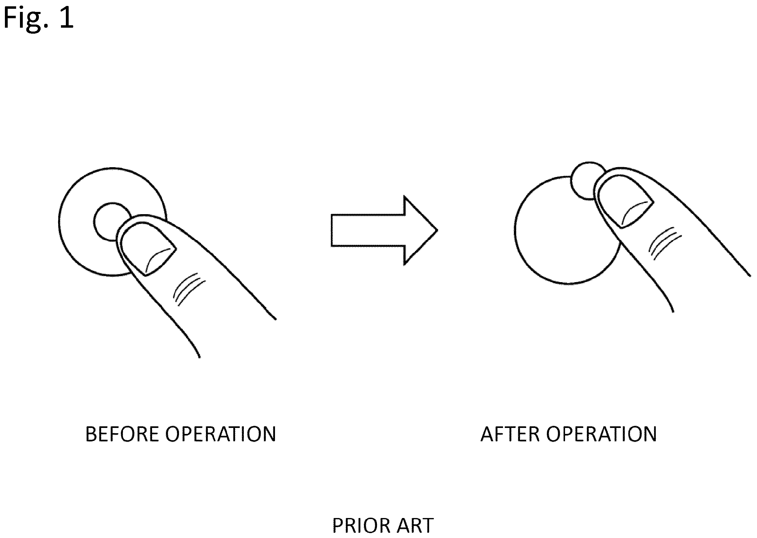

As such a user interface as disclosed in PTL 1, such a virtual joystick as illustrated in FIG. 1 is known and employed for a large number of currently released smartphone games. The user interface illustrated in FIG. 1 is displayed by arranging two circles that are large and small in the shape of concentric circles, and is configured so that, when a slide operation is conducted by the user, the small circle is displaced toward a direction of the slide operation. This allows the user to recognize a moving direction of the game character. The virtual joystick realizes provision of such a gaming experience as to be acquired from a related-art home-use game machine (Family Computer (trademark) produced by Nintendo Co., Ltd. or the like) on a smartphone by simulatively expressing a physical operation key, but the gaming experience acquired in this case is limited only to such gaming experience. In addition, the user remains dissatisfied in terms of operation feeling due to the lack of touch feeling.

Further, in such a user interface as disclosed in PTL 2, a cursor illustrated in FIG. 2 is employed. The user interface illustrated in FIG. 2 is displayed by arranging two circles that are large and small in one end portion on the start point side and another end portion on the end point side, and forms one cursor by connecting the two circles to each other with lines (see also paragraph [0071] to [0076] and FIGS. 5 of PTL 2). Further, as illustrated in FIG. 2, the cursor is formed so as to have a narrower area as the cursor becomes longer in order to maintain the area of the cursor at a fixed level (see also paragraph [0018] of PTL 2). According to the technology disclosed in PTL 2, the user can conduct a drag operation while recognizing information including positions of the start point and the end point of the drag operation, a distance from the start point to the end point, and a direction from the start point to the end point (see also paragraph [0006] of PTL 2). However, PTL 2 only discloses that the cursor is formed by merely connecting the two circles that are large and small, and does not disclose any specific principles or implementation methods in regard to which manner the circles are connected in. In this respect, it cannot be said that the cursor disclosed in PTL 2 realizes a user interface having a sufficient aesthetic appearance (for example, having beauty of a smooth curved line) for the user.

Summary of Invention

Technical Problem

The present invention has an object to provide a technology relating to a user interface capable of solving dissatisfaction with such a virtual joystick and providing such a new gaming experience as to cause even touch feeling to be physically sensed simulatively. In addition, the present invention has an object to provide a technology relating to a user interface configured to cause an elastic object formed with an extremely smooth curved line to behave so as to be able to be elastically deformed in such a manner as to stretch a circular shape.

Means for solving the Problem

A user interface according to an object of the invention is realized by the following user interface program and a game program. That is, according to the invention, a user interface program deforms and displays a shape of an elastic object on a touch panel of a mobile terminal. The user interface program causing the mobile terminal to function as: a first formation unit configured to form and display a first elastic object having a circular shape around a first contact point on the touch panel; a first determination unit configured to determine whether or not a slide operation has been conducted on the touch panel with a physical body; and a second formation unit configured to form and display a second elastic object deformed by stretching the circular shape toward a second contact point when the first determination unit determines that a slide operation from the first contact point to the second contact point has been conducted, the first elastic object being contained in a mesh region formed of a plurality of meshes, the second formation unit being further configured to deform the circular shape of the first elastic object by stretching each of the plurality of meshes along a direction of the slide operation so that the mesh closer to the second contact point becomes progressively longer.

Further, according to the invention, in the ninth user interface program, the second formation unit sets a reference point on a line in the direction of the slide operation extending from the first contact point on the touch panel, and deforms the circular shape of the first elastic object by forming the plurality of stretched meshes that contain the second elastic object based on a distance of the slide operation and distances from the reference point to the plurality of meshes that contain the first elastic object.

Furthermore, according to the invention, in the third user interface program, the mobile terminal functions as a third formation unit configured to form and display a third elastic object by further deforming a shape of the second elastic object when the first determination unit further determines that a slide operation from the second contact point to the third contact point has been conducted, the third formation unit rotates the second elastic object by an angle between the second contact point and the third contact point with reference to the first contact point, and forms and display the third elastic object by stretching a shape of the rotated second elastic object toward the third contact point.

Furthermore, according to the invention, the fourth user interface program further causes the mobile terminal to function as: a second determination unit configured to determine whether or not the physical body has been lifted off the touch panel at the second contact point; and a fourth formation unit configured to restore and display the first elastic object by contracting the deformed second elastic object toward the first contact point stepwise when the second determination unit determines that the physical body has been lifted off the touch panel at the second contact point.

Furthermore, according to the invention, the fifth user interface program deforms and displays a shape of an elastic object on a touch panel of a mobile terminal. The user interface program causing the mobile terminal to function as: a first formation unit configured to form and display a first elastic object having a circular shape around a first contact point on the touch panel; a first determination unit configured to determine whether or not a slide operation has been conducted on the touch panel; and a second formation unit configured to form and display a second elastic object deformed by stretching the circular shape toward a second contact point when the first determination unit determines that a slide operation from the first contact point to the second contact point has been conducted,
the first elastic object being contained in a mesh region formed of a plurality of meshes,
the second formation unit being further configured to:

divide the first elastic object into a first portion and a second portion based on the mesh region;

enlarge the first portion around the first contact point based on a distance of the slide operation;

move the second portion to a periphery of the second contact point; and

form the deformed second elastic object formed of a curved shape by connecting the enlarged first portion and the moved second portion to each other with a curved line.

In addition, according to the invention, the first game program is used for a game configured so that an action of a character within a virtual space is controlled and displayed based on an operation conducted on a touch panel of a mobile terminal. The game program causes the mobile terminal to function as: a first formation unit configured to form and display a first elastic object having a circular shape around a first contact point on the touch panel; a first determination unit configured to determine whether or not a slide operation has been conducted on the touch panel; a second formation unit configured to form and display a second elastic object deformed by stretching the circular shape toward a second contact point when the first determination unit determines that a slide operation from the first contact point to the second contact point has been conducted,
the first elastic object being contained in a mesh region formed of a plurality of meshes,
the second formation unit being further configured to deform the circular shape of the first elastic object by stretching each of the plurality of meshes along a direction of the slide operation so that the mesh closer to the second contact point becomes progressively longer; and a character control unit configured to execute a first character action based on the direction of the slide operation in response to the slide operation, and to display the character action together with the formed second elastic object.

Advantageous Effects of Invention

According to the present invention, an object configured to behave as an elastic body is displayed when a touch panel is operated by a user, and the object is elastically deformed based on an operation. With this configuration, it is possible to acquire a simulated experience that makes it seem as if a smartphone having a hard casing exhibits elasticity, and to provide a new user interface.

Further, such a user interface is associated with an action motion of a character within a virtual space (for example, movement or attack of the character in a competitive RPG) to allow the user to control an action of the character. With this configuration, it is possible to improve usability in the progress of a smartphone game that requires a high operation speed.

Brief Description of Drawings

FIG. 1 is an illustration of an example of a user interface according to the related art.

FIG. 2 is an illustration of an example of a user interface according to the related art.

FIG. 3 is a schematic diagram of a mobile terminal for executing a user interface program according to an embodiment of the present invention.

FIG. 4 is a block diagram for schematically illustrating a configuration of the mobile terminal of FIG. 3.

FIG. 5 is a block diagram for illustrating an outline of input/output conducted in the mobile terminal of FIG. 3.

FIG. 6 is a schematic diagram of a user interface displayed in a contact start point of a slide operation.

FIG. 7 is a schematic diagram of a user interface displayed in a contact end point of the slide operation.

FIG. 8 is a schematic diagram of a user interface displayed after the slide operation is finished.

FIG. 9 is a diagram of functional blocks implemented by using the user interface program according to the embodiment of the present invention.

FIGS. 10 are illustrations of a user interface image of an elastic object displayed in the contact start point of the slide operation.

FIG. 11 is a schematic diagram of a polygon that forms a part of the elastic object of FIGS. 10.

FIG. 12 is a schematic diagram for illustrating a change of the polygon exhibited when a part of the elastic object of FIG. 11 is elastically deformed.

FIG. 13 is a schematic diagram relating to elastic object deformation processing according to Example 1 of the present invention.

FIG. 14 is a schematic diagram relating to polygon direction adjustment processing to be conducted when the elastic object is deformed.

FIGS. 15 are schematic diagrams for illustrating the elastic object deformation processing according to Example 1 with a lapse of time.

FIGS. 16 are schematic diagrams for illustrating a case where another slide operation is conducted in regard to the elastic object deformation processing according to Example 1.

FIG. 17 is a schematic diagram relating to elastic object deformation processing according to Example 2 of the present invention.

FIG. 18 is an overall processing flowchart relating to the elastic object deformation processing according to the embodiment of the present invention.

FIG. 19 is a detailed processing flowchart relating to the elastic object deformation processing according to Example 2.

FIGS. 20 are schematic diagrams relating to elastic object deformation processing according to Example 3 of the present invention.

FIG. 21 is a detailed processing flowchart relating to the elastic object deformation processing according to Example 3.

FIGS. 22 are schematic diagrams for illustrating the elastic object deformation processing according to Example 3 with a lapse of time.

FIG. 23 is a schematic diagram relating to elastic object deformation processing according to Example 4 of the present invention.

FIG. 24 is a screen diagram for illustrating a game application example of the user interface conducted according to Example 1 or Example 2.

FIG. 25 is a screen diagram for illustrating a game application example of the user interface conducted according to Example 1 or Example 2.

FIG. 26 is a screen diagram for illustrating a game application example of the user interface conducted according to Example 1 or Example 2.

FIG. 27 is a screen diagram for illustrating a game application example of a user interface conducted according to Example 4.

FIG. 28 is a schematic diagram for illustrating another game application example of a user interface formed by executing the user interface program according to the embodiment of the present invention.

FIG. 29 is a schematic diagram for illustrating deformation of an elastic object illustrated in FIG. 28.

FIG. 30 is a schematic diagram relating to run-up movement processing based on the user interface illustrated in FIG. 28.

FIG. 31 is a diagram for illustrating a processing flowchart relating to the run-up movement processing based on the user interface illustrated in FIG. 28.

FIG. 32 is a screen diagram for illustrating a game application example of the user interface corresponding to FIG. 30.

Description of Embodiments

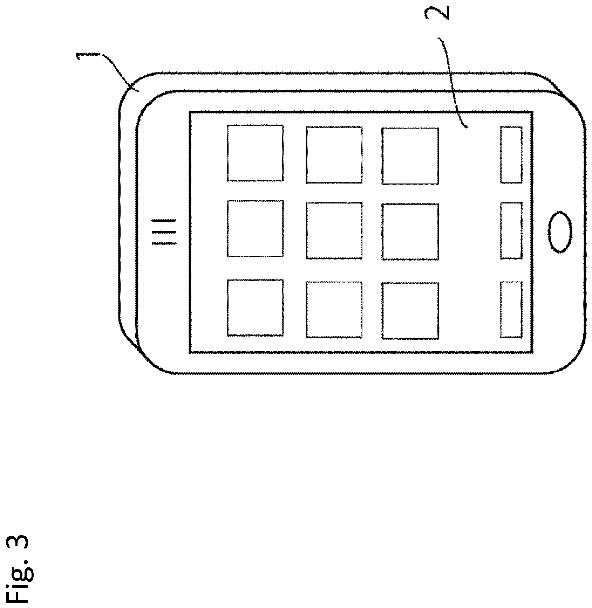

Now, with reference to FIG. 3 and the subsequent figures, a description is made of a user interface program for deforming and displaying a shape of an elastic object on a touch panel of a mobile terminal and a game program to be used for a game configured so that an action of a character within a virtual space is controlled and displayed based on an operation conducted on the touch panel of the mobile terminal through use of the elastic object, according to an embodiment of the present invention. In the figures, the same components are denoted by the same reference symbols.

The user interface program according to the embodiment of the present invention mainly constitutes a part of the game program serving as a smartphone game. More specifically, the user interface program is used for controlling an action of a game character (game object) within a virtual space as a part of the game program.

As illustrated in FIG. 3, a smartphone 1 includes a touch panel 2, and the user can control the action of the game character through a user operation conducted on the touch panel 2. Note that, the mobile terminal to execute the user interface program according to this embodiment is not limited to the smartphone 1, and any device may be employed as long as the device is a terminal including a touch panel, such as a device of, for example, a PDA or a tablet computer.

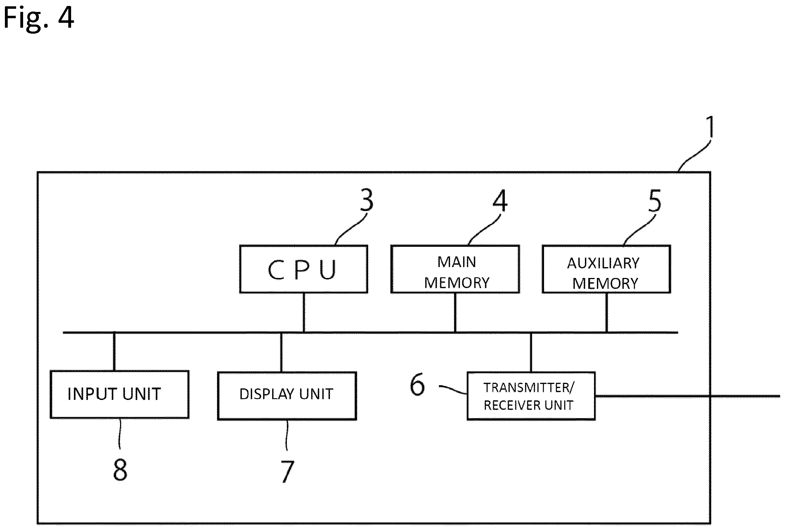

As illustrated in FIG. 4, the smartphone 1 includes a CPU 3, a main memory 4, an auxiliary memory 5, a transmitter/receiver unit 6, a display unit 7, and an input unit 8, which are connected to one another through a bus. Of those, the main memory 4 is formed of, for example, a DRAM, and the auxiliary memory 5 is formed of, for example, an HDD. The auxiliary memory 5 is a recording medium capable of recording the user interface program and the game program according to this embodiment. The user interface program stored in the auxiliary memory 4 is expanded onto the main memory 4, and executed by the CPU 3. Note that, data generated while the CPU 3 has been operating in accordance with the user interface program and the game program and data to be used by the CPU 3 are also temporarily stored on the main memory 4. Under control of the CPU 3, the transmitter/receiver unit 6 establishes a connection (wireless connection and/or wired connection) between the smartphone 1 and a network, and transmits and receives various kinds of information. The display unit 7 displays various kinds of information to be presented to the user under control of the CPU. The input unit 8 detects an input operation (mainly, operation involving physical contact such as touch operation, slide (swipe) operation, and tap operation) conducted with respect to the touch panel 2 by the user.

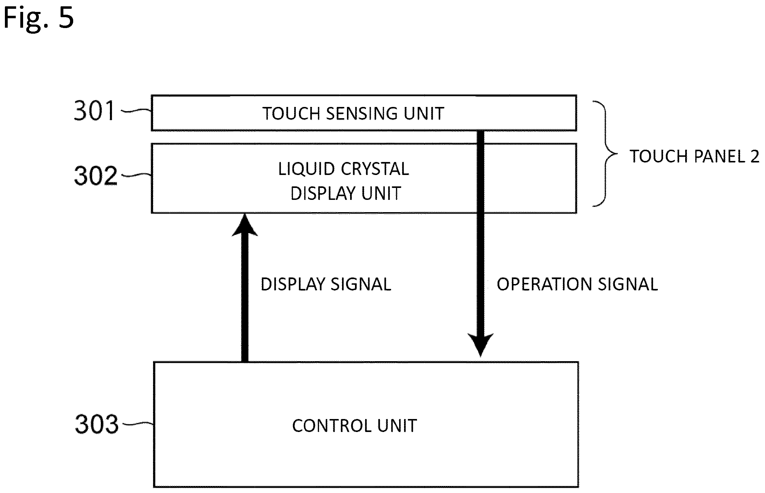

The display unit 7 and the input unit 8 correspond to the touch panel 2 described above. As illustrated in FIG. 5, the touch panel 2 includes a touch sensing unit 301 corresponding to the input unit 8 and a liquid crystal display unit 302 corresponding to the display unit 7. Under control of the CPU 3, the touch panel 2 displays an image, receives an interactive touch operation (operation involving physical contact or the like on the touch panel 2) conducted by a game player, and displays a graphics corresponding to the touch operation on the liquid crystal display unit 302 based on control of a control unit 303.

Specifically, the touch sensing unit 301 described above outputs an operation signal corresponding to the touch operation conducted by the user to the control unit 303. The touch operation can be conducted with any object, and may be conducted by, for example, a finger of the user or a stylus. As the touch sensing unit 301, for example, one having a capacitive type can be employed, but the present invention is not limited thereto. When detecting the operation signal received from the touch sensing unit 301, the control unit 303 determines that the user has conducted an operation instruction for the character, and conducts processing for transmitting a graphics (not shown) corresponding to the instruction operation to the liquid crystal display unit as a display signal. The liquid crystal display unit 302 displays a graphics corresponding to the display signal.

(1) Basic Configuration of User Interface

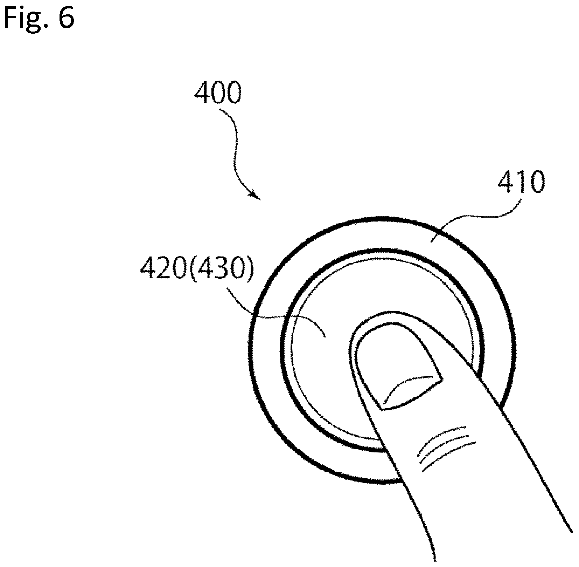

Now, with reference to FIG. 6 to FIG. 8, a description is made of a basic configuration of a user interface according to this embodiment. As illustrated in FIG. 6, an operation object 400 according to this embodiment includes a fixed circle 410 and an elastic object 400 positioned inside the fixed circle 410. The operation object 400 is displayed on the touch panel 2 when it is detected that the finger of the user has come into contact with the touch panel 2. As illustrated in FIG. 6, the elastic object 420 is formed to have a circular shape around a contact point on the touch panel 2 as an initial shape exhibited when the finger comes into contact. Note that, in FIG. 6, the circular shape is formed with the contact point being set as the center, but the present invention is not necessarily limited thereto. For example, the circular shape may be formed by being displaced upward or downward by a given distance. The displacement by a given distance can prevent the circular shape from being hidden by the finger of the user when the circular shape is displayed.

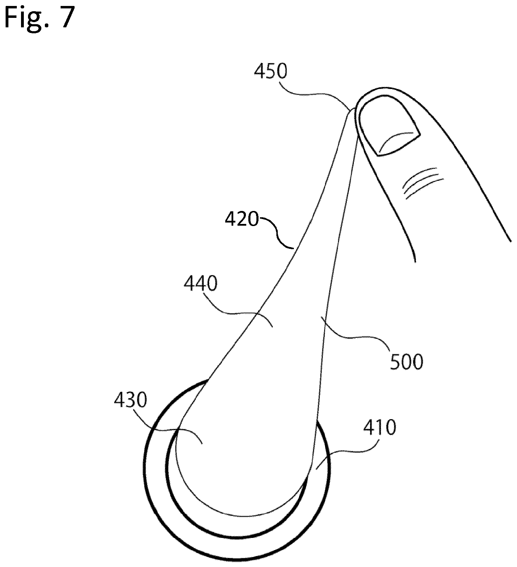

As illustrated in FIG. 7, the elastic object according to this embodiment is configured to behave like an elastic body based on the user's operation conducted on the touch panel. Specifically, when the user conducts a slide operation on the touch panel 2 (operation for moving the contact point from a contact start point to a contact end point on the touch panel 2), the elastic object 420 exhibits such an elastic deformation as to be pulled by the finger of the user. As illustrated in FIG. 7, the elastic object 420 includes a base portion 430 positioned in the contact start point of the slide operation, the position of which is fixed, a tip portion 450 positioned near the contact end point of the slide operation (note that, the finger is in a contact state), and a connecting portion 440 connecting the base portion 430 and the tip portion 450 to each other. (Note that, the base portion 430, the connecting portion 440, and the tip portion 450 may be hereinafter referred to collectively as "elastic object 420".)

In this manner, the elastic object is formed so as to be elastically stretched in a direction in which the slide operation has been conducted. That is, the initial circular shape is stretched toward the contact end point, to thereby form and display an elastic object 420' that has been elastically deformed. Note that, in FIG. 7, the elastic object 420 is formed so as to cause the base portion 430 to become larger than the tip portion 450, but the present invention is not limited thereto, and conversely, the tip portion 450 may be formed to become larger than the base portion 430. Further, when the user further moves the contact end point on the touch panel while maintaining the contact state, the tip portion 450 further moves by following the movement, and a direction for stretching the elastic object 420 also changes.

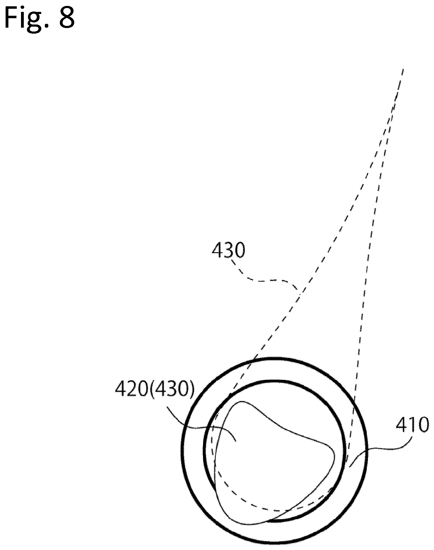

Next, as illustrated in FIG. 8, when the user finishes the slide operation (that is, when the finger of the user comes off the contact end point on the touch panel 2), the elastic object that has been elastically deformed is contracted stepwise toward the contact start point in accordance with a restoring force of the elastic object, to thereby be displayed so as to restore the initial shape illustrated in FIG. 6. In this case, as illustrated in FIG. 8, the elastic object is displayed so as to protrude from the fixed circle 410 in a contracting direction reverse to a stretching direction of the elastic object 420 as a reaction of the restoring force, and then restores the initial shape. Note that, the elastic object 420 illustrated in FIG. 8 is deformed along with the restoration, but the present invention is not limited thereto. For example, the elastic object may restore the initial shape without being subjected to such a deformation, and the position of the elastic object may be displaced so as to vibrate in the contracting direction reverse to the stretching direction.

(2) Major Functions of Programs

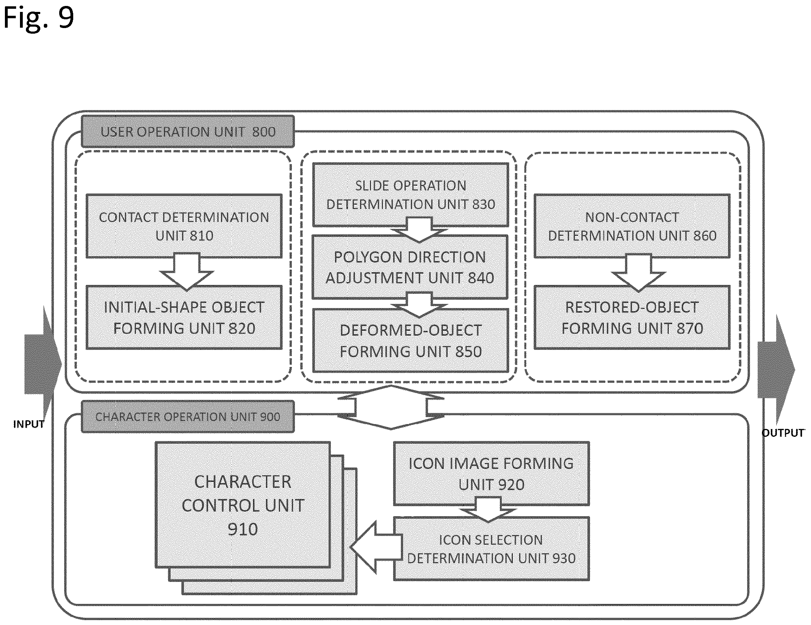

With reference to FIG. 9, a description is made of a set of major functions implemented by the user interface program and the game program according to this embodiment. Through the function set, an input serving as an operation signal is processed, and an output serving as a display signal is generated. The function set includes a user operation unit 800 relating to a user input operation to be conducted through the touch panel and a character operation unit 900 for operating a character by controlling the action of the character within the virtual space of a game based on an operation conducted on the touch panel. In the user operation unit 800, determination processing for a user input operation is conducted by each of a contact determination unit 810, a slide operation determination unit 830, and a non-contact determination unit 860, and based on results of the determination, processing for forming various objects is executed by an initial-shape object forming unit 820, a polygon direction adjustment unit 840 and a deformed-object forming unit 850, and a restored-object forming unit 870, which correspond to the contact determination unit 810, the slide operation determination unit 830, and the non-contact determination unit 860, respectively.

The contact determination unit 810 determines whether or not contact has been made on the touch panel with a physical body. When the contact determination unit 810 determines that contact has been made with a physical body, the initial-shape object forming unit 820 forms and displays an elastic object having a circular shape around the contact point on the touch panel. The slide operation determination unit 830 determines whether or not a slide operation has been conducted on the touch panel with the physical body. When the slide operation determination unit 830 determines that a slide operation has been conducted from the contact start point to the contact end point with the physical body, the polygon direction adjustment unit 840 conducts adjustment processing using a rotation of a polygon so that a direction of the polygon matches a moving direction of the physical body. Subsequently, The deformed-object forming unit 850 forms and displays a deformed elastic object by stretching the initial circular shape toward the contact end point.

When the slide operation is continued as it is, the polygon direction adjustment unit 840 further conducts polygon direction adjustment processing again, and the deformed-object forming unit 850 further stretches the deformed elastic object toward another contact end point. The non-contact determination unit 860 determines whether or not the physical body has come off the touch panel at the contact end point during the slide operation. When the non-contact determination unit 860 determines that the physical body has come off, the restored-object forming unit 870 contracts the elastic object deformed by the deformed-object forming unit 850 stepwise toward the contact start point, to thereby restore and display the elastic object having the initial circular shape formed by the initial-shape object forming unit 820.

Meanwhile, the character control unit 900 controls the action of the character within the virtual space based on an operation conducted on the touch panel through the user operation unit 800. A character control unit 910 executes a character action based on a moving amount (moving distance) and a moving direction of the slide operation based on the slide operation determined by the slide operation determination unit 830, and displays the character action together with the deformed elastic object formed by the deformed-object forming unit 850. A large number of actions are assumed as character actions to be controlled by a character control unit, and are each associated with a given user operation and/or icon image.

When the elastic object having the initial circular shape is formed by the initial-shape object forming unit 820, an icon image forming unit 920 further generates and displays at least one icon image around the elastic object. An icon selection determination unit 930 determines whether or not the contact point on the touch panel corresponds to an arrangement position of the icon image. When it is determined by the slide operation determination unit 830 that the slide operation has been conducted, and when the icon selection determination unit 930 determines that the contact end point corresponds to the arrangement position of the icon image, the character control unit 910 executes the character action associated with the icon image.

(3) Deformation Processing for Elastic Object

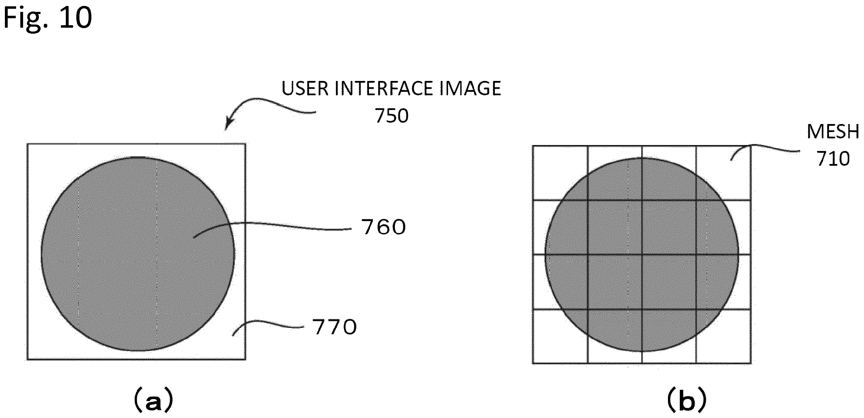

Next, with reference to FIGS. 10 to FIG. 23, processing relating to the deformation of the elastic object according to this embodiment, the basic configuration of which has been described above, is described in detail by taking several examples.

(3-a) Basic Principle of Elastic Object Deformation Processing

FIGS. 10 are schematic illustrations of a user interface image of an elastic object having a circular shape, which is formed when the finger comes into contact with the touch panel 2. As illustrated in FIG. 10(a), when the elastic object according to this embodiment is displayed, an image is generated as a user interface image 750 having a substantially square shape, and is superimposed on a game image as a part thereof. The user interface image 750 is formed of a translucent region 760 and a transparent region 770, and the translucent region 760 is displayed on a screen as a basic display region of the elastic object.

More specifically, as illustrated in FIG. 10(b), the elastic object according to this embodiment is contained in a substantially square mesh region, and is formed as a polygon divided into a plurality of meshes 710. In FIG. 10(b), as an example, the user interface image 750 is divided into 4x4=16 meshes, and contains the elastic object, but it is understood by a person skilled in the art that there is no limitation imposed on the number of meshes for the division. Further, the deformation of the elastic object according to this embodiment is realized by virtually conducting processing for stretching the user interface image 750 like a rubber sheet, in particular, physical arithmetic operation processing for stretching the user interface image 750 in units of meshes (the processing is described later in detail).

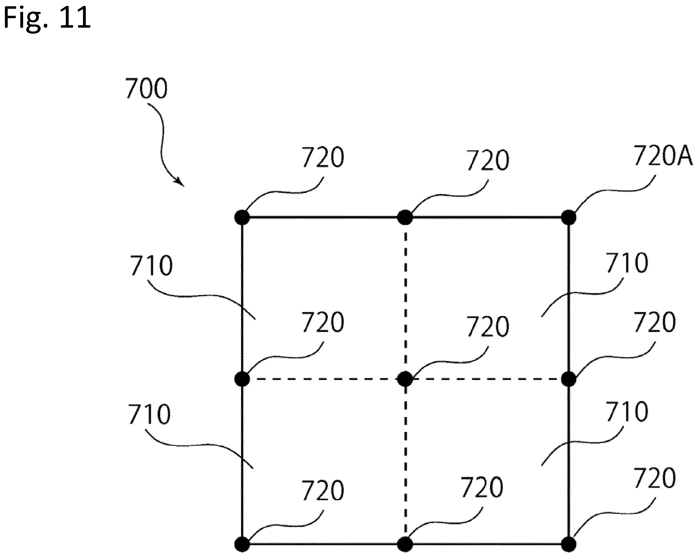

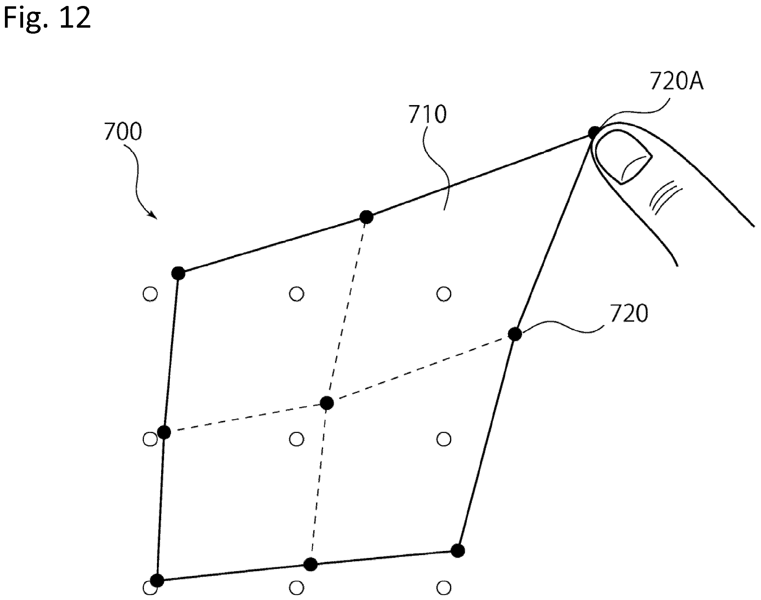

Next, with reference to FIG. 11 and FIG. 12, a description is made of the above-mentioned physical arithmetic operation processing for stretching the user interface image 750 in units of meshes. In FIG. 11 and FIG. 12, a part of the elastic object is schematically illustrated as an example. In the elastic object according to this embodiment, the elastic deformation is expressed by moving coordinates of respective vertices 720 of a plate-like polygon 700 divided into the plurality of meshes 710. The respective vertices 720 are arranged in a mesh shape, and when the coordinates of an arbitrary vertex 720A are moved by the slide operation, the coordinates of other vertices 720 are also changed based on a moving vector (for example, moving direction and moving distance) relating to the vertex 720A. For example, the moving distances of the vertices 720 other than the vertex 720A may each be weighted based on a distance from the vertex 720A. That is, as illustrated in FIG. 12, a change amount of the coordinates may be set to become smaller as the distance from the vertex 720A becomes larger (as the coordinates becomes farther from the vertex 720A). Note that, white circles illustrated in FIG. 12 represent the positions of the vertices before the movement (that is, those illustrated in FIG. 11).

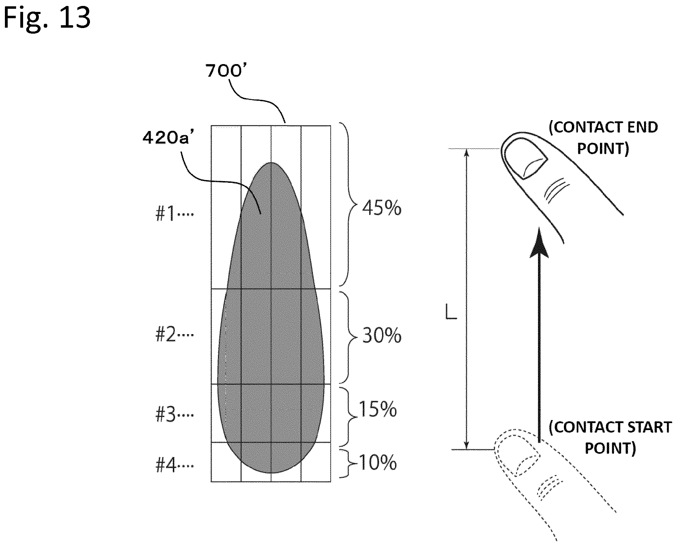

In view of the foregoing, further with reference to FIG. 13 and the subsequent figures, a description is made of various Examples of object deformation processing based on the above-mentioned basic principle.

(3-b) Example 1

FIG. 13 is a schematic illustration of an example of an elastic object 420a deformed based on Example 1 of the present invention. In this example, the deformed-object forming unit 850 stretches the initial circular shape generated by the initial-shape object forming unit 820 toward the end point along the direction of the slide operation, to thereby form a deformed elastic object 420a'. In particular, in the example of FIG. 13, when the coordinates of the respective vertices of the plurality of meshes obtained by the division are moved, each of the plurality of meshes is stretched such that, while the same rectangular shape is maintained for each of the columns (#1 to #4) (for example, meshes #1A to #1D all have the same rectangular shape), the meshes in the column (#1) closer to the contact end point become progressively longer than the meshes in the farther column (#4). As an example, the respective columns may be configured to have stretching factors subjected to weighted distribution based on a moving distance L exhibited by the slide operation.

In the example of FIG. 13, the respective columns are distributed such that #4 accounts for 10%, #3 accounts for 15%, #2 accounts for 30%, and #1 accounts for 45% (100% in total). In addition, when the moving distance is set as, for example, 2L, the respective columns may be subjected to weighted distribution so as to be further increased such that #4 accounts for 1%, #3 accounts for 4%, #2 accounts for 35%, and #1 accounts for 60%.

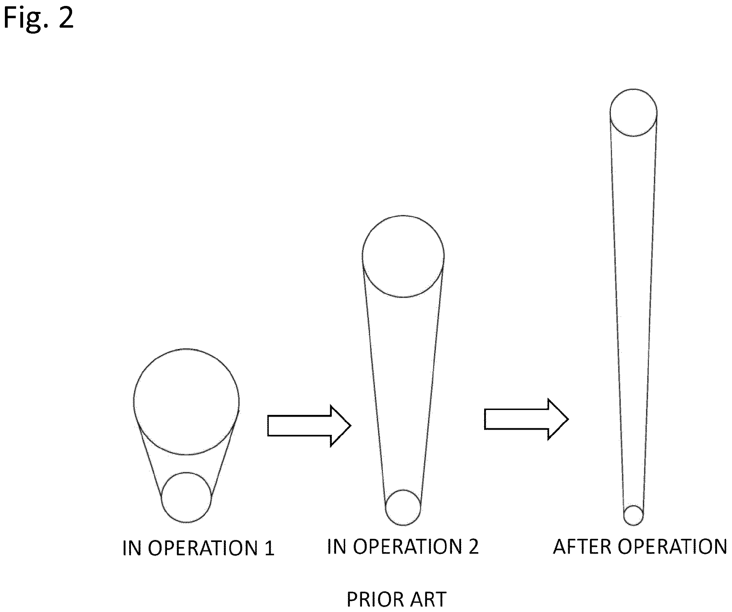

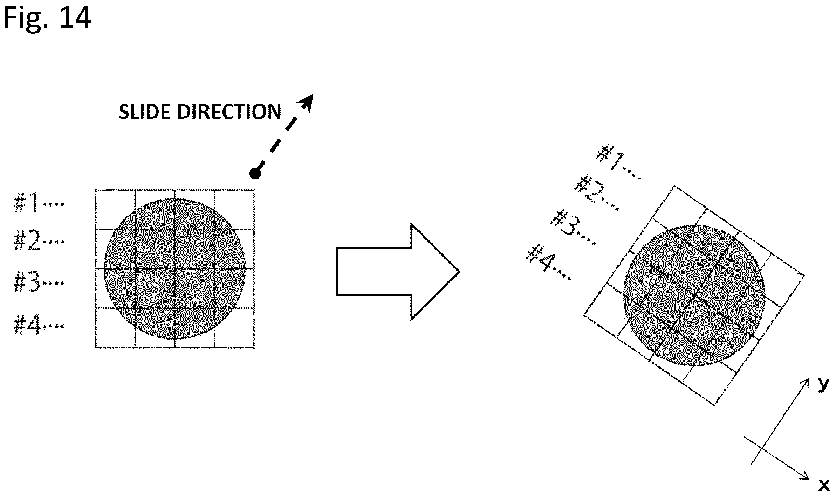

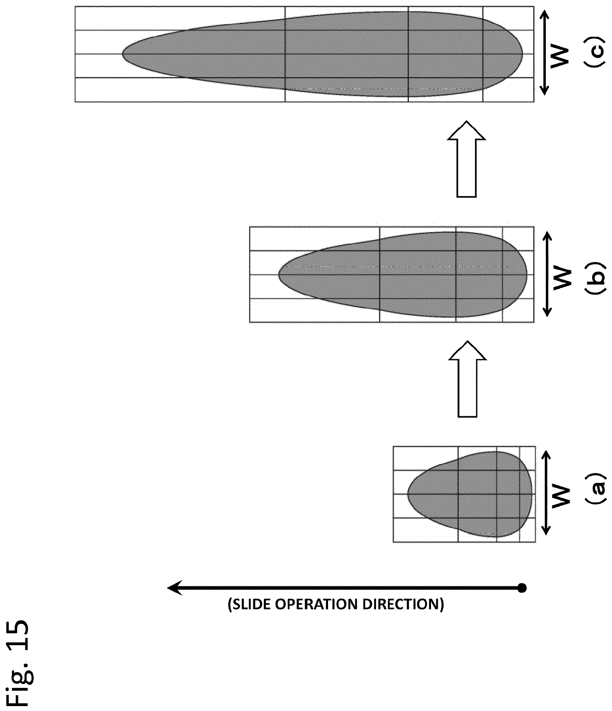

In this example, as schematically illustrated in FIG. 14, the polygon direction adjustment unit 840 first conducts the adjustment processing using the rotation of the polygon (polygon direction adjustment processing) so that the direction of the polygon matches the moving direction of the physical body. By conducting the polygon direction adjustment processing, as schematically illustrated in FIGS. 15, the deformed elastic object can be deformed while constantly having a fixed width W (diameter of the translucent region 760 having a circular shape illustrated in FIGS. 10) with respect to a slide operation direction irrespective of the moving distance of the sliding. As can be understood by a person skilled in the art even in comparison with the related art illustrated in FIG. 2, the elastic object deformed according to this example can be made to differ from the related art in that the elastic object can be configured to constantly have the fixed width W, and that the elastic object is deformed by stretching the initial circular shape toward the contact end point, to thereby allow the elastic object to have an extremely smooth curved shape.

Note that, this example is not limited to the fixing the width W described above with reference to FIGS. 15 to the diameter of a circle, and may be configured to, for example, gradually increase the width W based on the slide operation. That is, an enlargement ratio may be set so that the width W is gradually increased as the moving distance increases as in FIG. 15(a), FIG. 15(b), and FIG. 15(c). This allows an amount of the slide operation to be visually recognized more easily by the user as a size of the elastic body object.

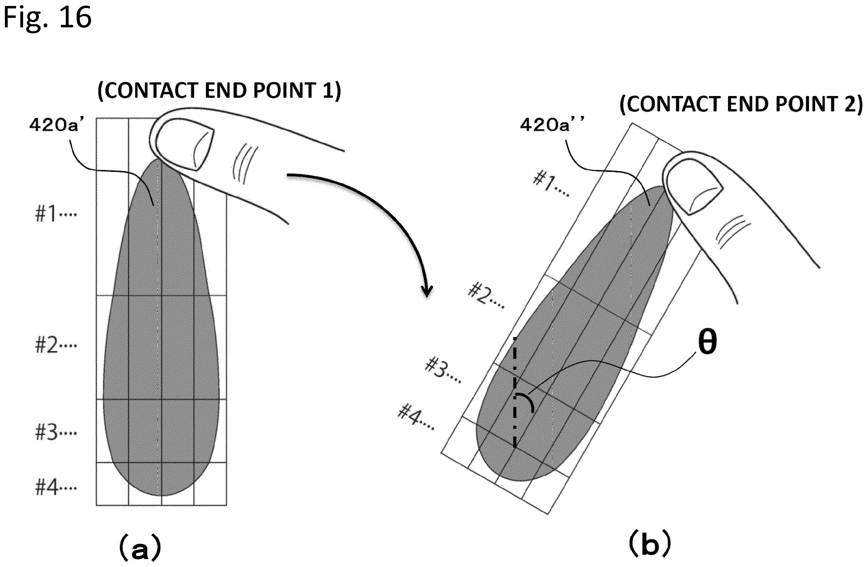

In relation to the polygon direction adjustment processing, as schematically illustrated in FIGS. 16, when the user further conducts the slide operation with the finger up to another contact end point 2 (FIG. 16(b)) without lifting the finger off a contact end point 1 (FIG. 16(a)), the deformation of the elastic object is continued. That is, the direction of the polygon is rotated by an angle between the contact end point 1 and the contact end point 2 with respect to the contact start point of the slide operation, to thereby rotate the deformed elastic object 420a', and then the shape of the rotated elastic object is continuously stretched up to the end point 2, to thereby form a further deformed elastic object 420a".

(3-c) Example 2

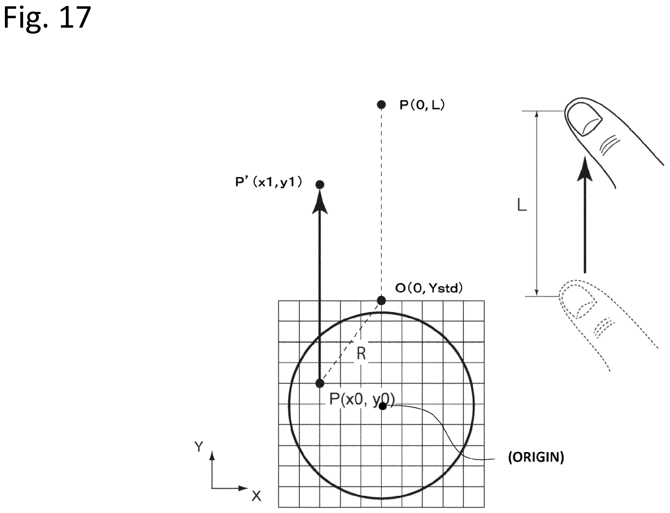

FIG. 17 is a schematic illustration of an example of an elastic object 420b deformed based on Example 2 of the present invention. According to Example 2, the elastic object can be formed to have a curved shape smoother than in Example 1. Note that, in the same manner as in Example 1, the polygon direction adjustment processing is first conducted also in this processing example. Unlike in Example 1, this example is not limited to the stretching each mesh while maintaining the rectangular shape in each column (FIGS. 15). That is, in this example, first, one of mesh points on a line in the slide operation direction extending from the contact start point of the slide operation on the touch panel is set as a reference point O (0,Ystd).

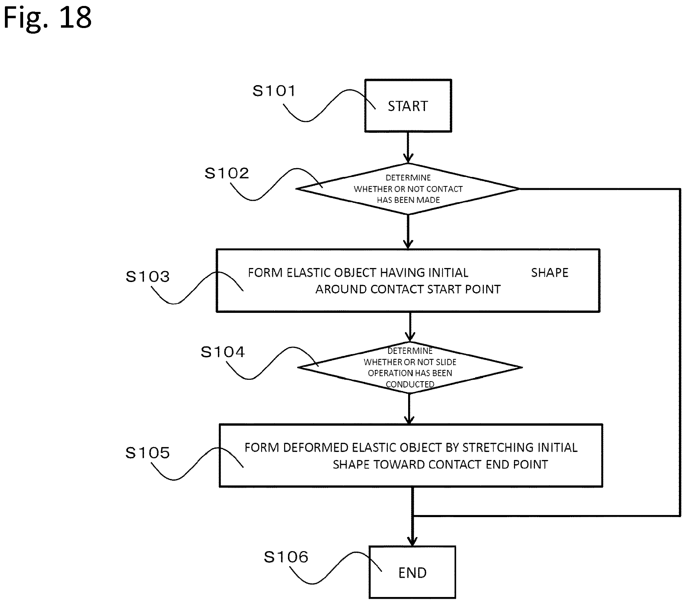

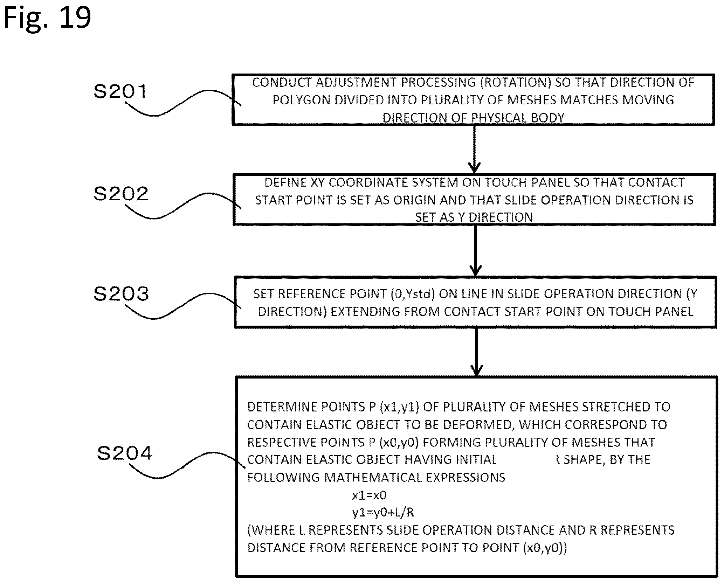

It suffices that the vertices of the plurality of meshes for containing the elastic object to be deformed are subsequently determined based on the moving distance L of the slide operation and distances from the reference point O to the plurality of meshes (in particular, distances R from the reference point O to the respective vertices of the plurality of meshes). In this example, it is understood by a person skilled in the art that the rectangular shape in each column is not maintained in consideration of the fact that the distance R that differs for each vertex is used to calculate the coordinates. In view of the foregoing, the processing according to this example is described below in detail with reference to flowcharts of FIG. 18 and FIG. 19.

As illustrated in FIG. 18, this example is started in Step S101, and in Step S102, the contact determination unit 810 determines whether or not contact has been made on the touch panel. When it is determined that contact has been made with a physical body (finger), the procedure advances to Step S103, and the initial-shape object forming unit 820 forms an elastic object having an initial circular shape around the contact start point (see also FIGS. 10). The procedure then advances to Step S104, and the slide operation determination unit 830 determines whether or not a slide operation has been conducted on the touch panel with the physical body. When it is determined that a slide operation has been conducted, the procedure advances to Step S105, and the polygon direction adjustment unit 840 and the deformed-object forming unit 850 stretch the initial circular shape toward the contact end point, to thereby form a deformed elastic object.

Now, processing for forming the deformed elastic object conducted in Step S105 is described in more detail with reference to the flowchart of FIG. 19. When it is determined in Step S104 that a slide operation has been conducted, first, in Step S201, the polygon direction adjustment unit 840 conducts the polygon direction adjustment processing described above in Example 1 (see also FIG. 14). In this respect, also in this processing example, the elastic object 420b can be deformed while constantly having the fixed width W with respect to the slide operation direction. At the same time, in Step S202, XY coordinates on the touch panel are defined for the deformation of the elastic object 420b. This XY coordinate system is defined so that the contact start point is set as an origin and that the slide operation direction is set as a Y direction.

Subsequently, in Step S203, the reference point (0,Ystd) is set on the line in the slide operation direction (Y direction) extending from the contact start point on the touch panel. It is desired that the reference point be set at the vertices on an outer periphery of the polygon in the Y direction as illustrated in FIG. 17.

Then, in Step S204, when the elastic object is deformed, the changed-object forming unit 850 transfers the respective vertices P (x0,y0) of the plurality of meshes that contain the elastic object having the initial circular shape. That is, respective corresponding vertices P' (x1, y1) of the plurality of meshes are determined. In this case, assuming that L represents the moving distance and R represents the distance from the reference point (0,Ystd) to each point (x0,y0), each corresponding vertex P' (x1, y1) corresponding to each vertex P (x0,y0) is calculated by the following mathematical expressions.

$$x1=x0$$

$$y1=y0+L/R$$

According to the above-mentioned mathematical expressions, it is understood by a person skilled in the art that a vertex having a larger distance R from the reference point to each point (x0,y0) is calculated as exhibiting less movement in the Y direction and moves less far. Step S204 is conducted for all the vertices of the plurality of meshes, to thereby determine all the corresponding vertices of the stretched meshes, with the result that a deformed elastic object is formed. The elastic object formed by the deformed-object forming unit 850 does not need to maintain the rectangular shape unlike in Example 1, and hence a smoother curved shape can be formed.

Returning to FIG. 18, this processing ends in Step S106. Although not shown, when the user continuously causes the finger to make a slide action after Step S106 of FIG. 18, as illustrated also in Example 1, the elastic object is continuously further deformed. That is, the polygon direction adjustment unit 840 rotates the direction of the polygon by the angle between the contact end point 1 and the contact end point 2 with respect to the contact start point of the slide operation, to thereby rotate the deformed elastic object. Subsequently, the deformed-object forming unit 850 stretches the shape of the rotated elastic object up to the end point 2, to thereby form a further deformed elastic object.

On the other hand, after Step S106, when the non-contact determination unit 860 determines that the user has lifted the finger off the touch panel, as described above with reference to FIG. 8, the restored-object forming unit 870 contracts the elastic object that has been elastically deformed stepwise toward the start point in accordance with a restoring force of the elastic object. Finally, the initial shape illustrated in FIG. 6 is restored. It is understood by a person skilled in the art that the contracting processing can be realized by appropriately selecting the reference point (0,Ystd) again stepwise, and conducting a calculation based on the above-mentioned mathematical expressions through use of the moving distance and the distances from the selected reference point (0,Ystd) to the respective points (x0,y0).

(3-d) Example 3

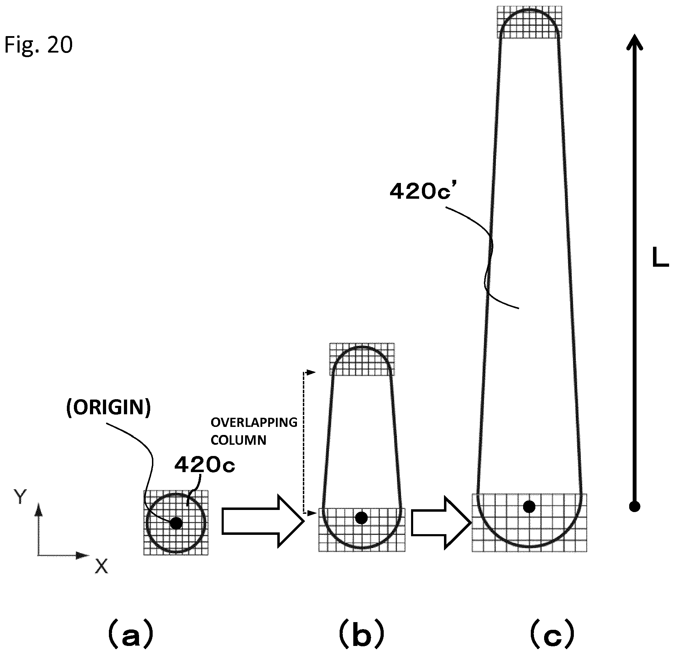

FIGS. 20 are schematic illustrations of an example of an elastic object 420c deformed based on Example 3 of the present invention. According to Example 3, compared to Examples 1 and 2, an elastic object 420c' can be further formed to have a more dynamic curved shape in association with the slide operation of the physical body. In the same manner as in Examples 1 and 2, the polygon direction adjustment processing is first conducted also in this example. An overall outline of deformation processing according to this example is substantially the same as that of the flowchart of FIG. 18 described in Example 2.

Meanwhile, in this example, unlike in Example 2, the deformed-object forming unit 850 does not stretch each of the plurality of meshes along the direction of the slide operation. Instead, in this example, the deformed-object forming unit 850 divides the elastic object having the initial circular shape into two portions based on mesh regions, and enlarges one mesh region portion, while moving the other mesh region to the periphery of the contact end point. Then, these are connected to each other, to thereby form a deformed elastic object.

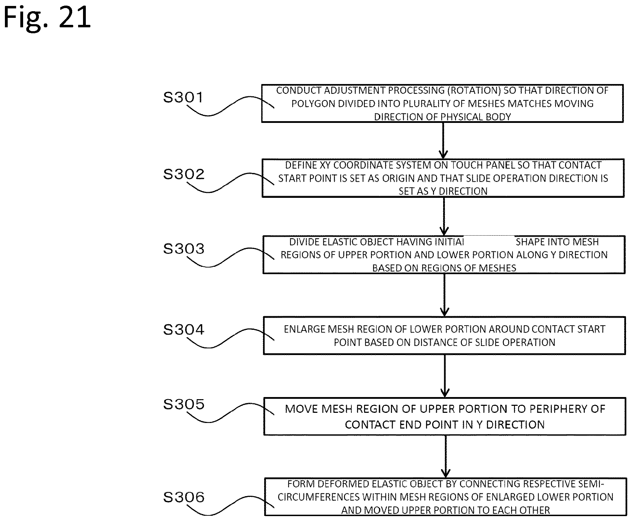

Details of this example (in particular, details of Step S105 of FIG. 18) are described with reference to a flowchart of FIG. 21. When the slide operation determination unit 830 determines in Step S104 of FIG. 18 that the slide operation has been conducted, first, in Step S301, the polygon direction adjustment unit 840 conducts the polygon direction adjustment processing as described above also in Example 1. At the same time, in Step S302, XY coordinates on the touch panel may be defined for the deformation of the elastic object 420c. This XY coordinate system is defined so that, as illustrated in FIG. 20(a), the contact start point is set as the origin and that the slide operation direction is set as the Y direction.

Subsequently, in Step S303, the deformed-object forming unit 850 divides the elastic object having the initial circular shape into two mesh regions of an upper portion and a lower portion based on a plurality of mesh regions. In this case, the two mesh regions are formed by dividing the initial circular shape into semicircles in a direction (X direction) perpendicular to the slide operation direction (Y direction). Note that, the two mesh regions of the upper portion and the lower portion may have an overlap in a part thereof, and in the example of FIG. 20(b), has an overlapping column corresponding to one column.

Then, in Step S304, the deformed-object forming unit 850 first enlarges the mesh region of the lower portion around the contact start point with an enlargement ratio corresponding to the moving distance L of the slide operation. This increases the size of the mesh region around the contact start point as the slide operation distance L becomes longer, as understood by a person skilled in the art even in comparison with the sizes of the mesh regions of the lower portions of FIG. 20(b) and FIG. 20(c). That is, it is desired that the mesh region be formed so as to be enlarged with a large semi-circumference in the slide operation direction (Y direction) and/or the direction (X direction) perpendicular to the slide operation direction. Subsequently, in Step S305, the deformed-object forming unit 850 next moves the mesh region of the upper portion to the periphery of the contact end point in the Y direction.

In FIG. 20(b) and FIG. 20(c), the size of the mesh region of the upper portion is set to be the same. That is, in this case, the size of the mesh region of the upper portion is not based on the slide operation distance L. However, in the same manner as the case of the lower portion, the size of the mesh region of the upper portion may also be formed so as to be enlarged based on the slide operation distance L. In this case, it is desired that the enlargement ratio of the upper portion be determined in association with the enlargement ratio of the lower portion used in Step S304. Specifically, in order to form the elastic object 420c' according to this example to have such a shape as to be tapered toward the tip along the direction of the slide operation, it is desired that the enlargement ratio of the upper portion be set smaller than the enlargement ratio of the lower portion used in Step S304.

Finally, in Step S306, the deformed-object forming unit 850 forms a deformed elastic object by connecting the respective semi-circumference portions within the mesh regions of the lower portion enlarged in Step S304 and the upper portion moved in Step S305 to each other. For example, the semi-circumference portions on the overlapping columns illustrated in FIG. 20(b) are connected to each other. As a connection manner, the semi-circumference portions may be connected by straight lines as illustrated in FIG. 20(b) and FIG. 20(c), but in addition, in order to form the elastic object to have a smoother curved shape, such an arbitrary effect process as to stretch connection lines in the X direction may be conducted.

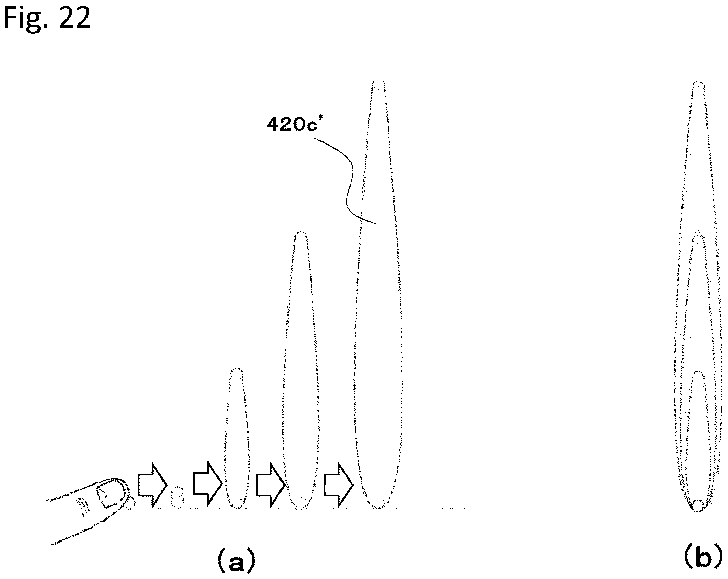

FIGS. 22 are schematic illustrations of a series of elastic objects 420c formed to have smoother curved shapes. In FIG. 22(a), how the series of elastic objects 420c change is illustrated in time series, and in FIG. 22(b), the respective elastic objects are illustrated so as to be superimposed on one another. As illustrated in FIGS. 22, the lower portion of the initial circular shape is enlarged to become larger based on the slide operation distance, and hence it is understood by a person skilled in the art that the width of the elastic object 420c becomes larger as the slide operation distance becomes larger. This example is different in the shape from Examples 1 and 2 involving the fixed width. In this example, by increasing the width of the elastic object 420c, the elastic object 420c' can be formed to have a more dynamic curved shape in association with the slide operation of the physical body.

Although not shown, when the user continuously conducts a slide operation with the finger on the touch panel after Step S106 of FIG. 18, as described also in Examples 1 and 2, the elastic object is further deformed. That is, the polygon direction adjustment unit 840 rotates the direction of the polygon by the angle between the contact end point 1 and the contact end point 2 with respect to the contact start point of the slide operation, to thereby rotate the deformed elastic object. Subsequently, the deformed-object forming unit 850 stretches the shape of the rotated elastic object up to the end point 2, to thereby form a further deformed elastic object.

On the other hand, after Step S106, when the non-contact determination unit 860 determines that the user has lifted the finger off the touch panel, as described above with reference to FIG. 8, the restored-object forming unit 870 contracts the elastic object that has been elastically deformed stepwise toward the start point in accordance with a restoring force of the elastic object, to thereby restore the initial shape illustrated in FIG. 6. It is understood by a person skilled in the art that the contracting processing can be realized by appropriately determining stepwise the enlargement ratio depending on the slide operation distance used in Step S304, and conducting the respective processing steps of from Step S302 to Step S306.

(3-e) Example 4

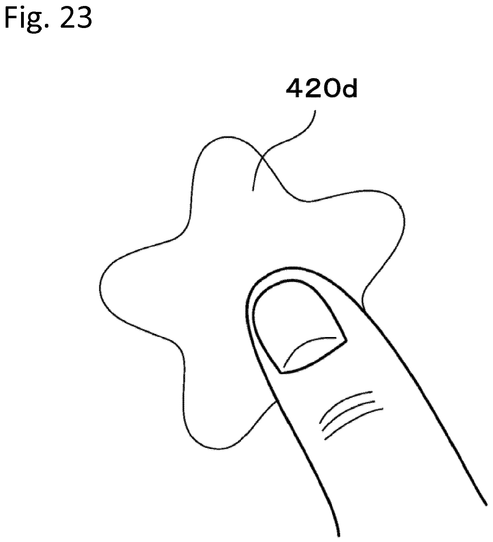

FIG. 23 is a schematic illustration of an example of an elastic object deformed based on Example 4 of the present invention. As illustrated in FIG. 23, as a modification example of this embodiment, when a tap operation (operation for conducting a touch (instantaneous contact operation) on the touch panel 2) is conducted, an elastic object 900 is displayed at a tap operation point under the state of being elastically deformed as if the elastic object 900 were crushed. An outer periphery of an elastic object 420d is formed of a sine curve expressed by the following general expression. In this embodiment, the values of A, w, and T are randomly defined within a predetermined limiting range. This allows the shape of the elastic object to be deformed at random, and to become closer to the shape of the outer periphery exhibited when an elastic body is crushed in reality.

$$y = A\sin(\omega t + T)$$

Note that, the shape of the elastic object 420d illustrated in FIG. 23 may be changed based on a parameter used in the game. For example, in a competitive RPG, the size and shape of a star may be changed by a magnitude of damage given to an opponent character, the type or the like of a weapon used by the game character, moreover, an occurrence of a continuous combo (a series of attacks made to the opponent character), and the like.

(4) Application Example of User Interface Program

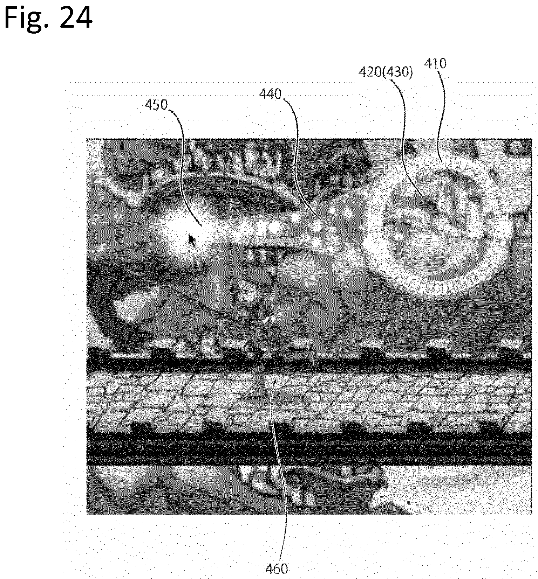

With reference to FIG. 24 to FIG. 32, a description is made of application examples of applying the user interface of the elastic object to a game according to this embodiment described above. FIG. 24 to FIG. 27 are screen examples obtained when the user interface program according to this embodiment and a game program including the user interface program are executed. A competitive RPG configured so that a game object (for example, game character) arranged in a virtual space within a game and displayed on the touch panel is operated with the physical body such as the finger of the user is assumed as a smartphone game. This game program is implemented based on any one of the various Examples described above. In response to the slide operation of the user, a character action based on the moving direction and the moving distance of the slide operation is executed, and the character action is displayed together with the deformed elastic object.

(4-a) Game Application Example 1

FIG. 24, FIG. 25, and FIG. 26 are game screen examples obtained when the game program including the user interface program implemented based on Example 1 or Example 2 is executed. In response to the slide operation of the user, the character control unit 910 executes a character moving action based on the moving distance and the moving direction of the slide operation, and displays the character moving action together with the deformed elastic object.

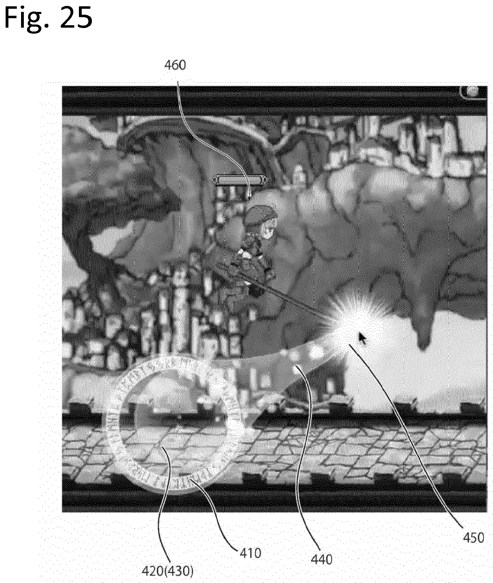

As illustrated in FIG. 24, when the user conducts a slide operation toward the left direction on the touch panel 2, the elastic object 420 is displayed so as to be elastically deformed toward the left direction. In response to this operation, an action for causing a game character 460 to move toward the left direction is executed. On the other hand, as illustrated in FIG. 25, when the user conducts a slide operation toward the upper (right) direction on the touch panel 2, the elastic object 420 is displayed so as to be elastically deformed toward the upper (right) direction. In response to this operation, an action for causing the game character 460 to jump toward the upper (right) direction is executed.

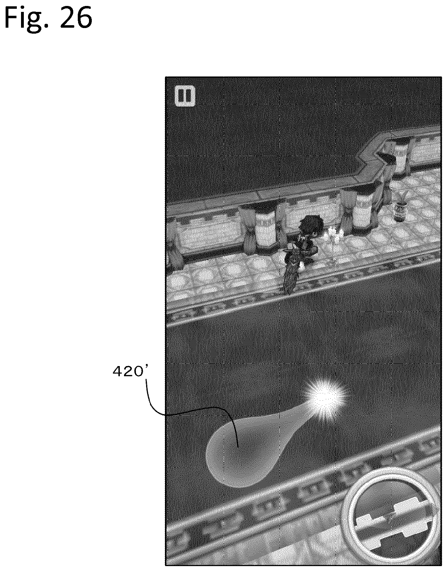

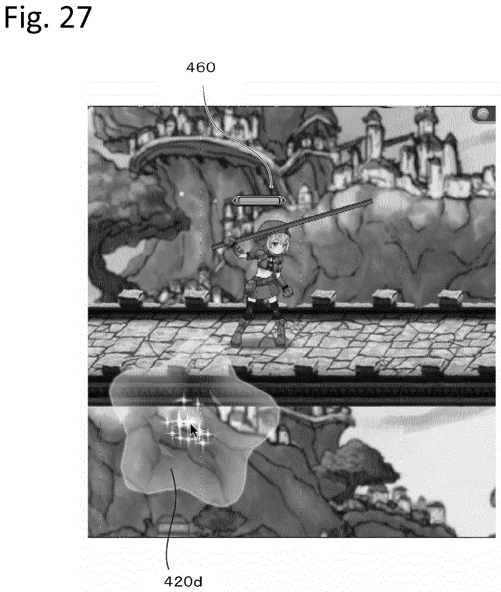

FIG. 24 and FIG. 25 are the game screen examples of a game in a two-dimensional virtual space, while the game screen of FIG. 26 is the screen example of a game in a three-dimensional virtual space. The same applies to the three-dimensional virtual space, and as illustrated in FIG. 26, when the user conducts a slide operation toward the upper right direction on the touch panel 2, the elastic object 420 is displayed so as to be elastically deformed toward the upper right direction. In response to this operation, the game character 460 three-dimensionally moves toward the upper right direction. Further, FIG. 27 is a screen example of a case where the game program including the user interface program implemented based on Example 4 is executed. This screen example is an example of executing and displaying an attacking action made by a character in response to the user's operation. When the user conducts a tap operation on the touch panel 2, the elastic object 420d implemented based on Example 4 is displayed. In response to this operation, the game character 460 executes the attacking action.

(4-b) Game Application Example 2

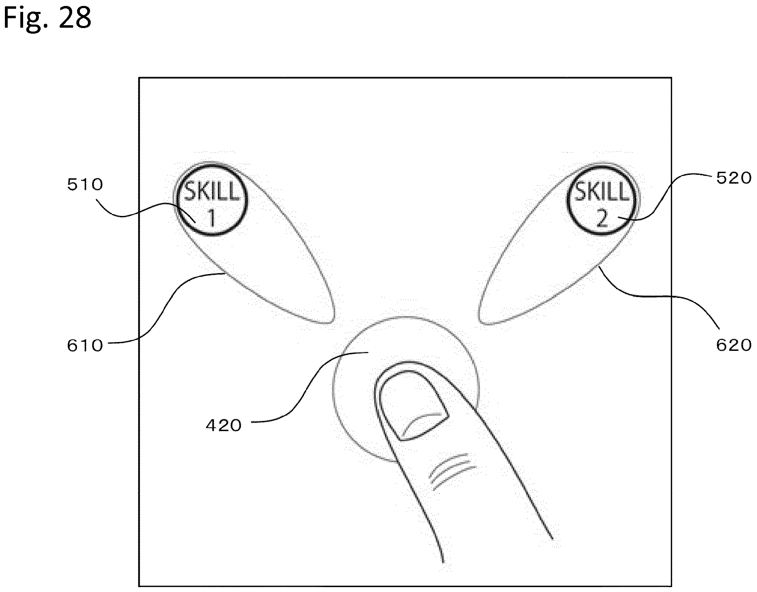

FIG. 28 is a user interface image example of a case where the user interface program implemented based on any one of Example 1 to Example 3 is at least executed according to an embodiment of the present invention. This user interface image example is displayed in a predetermined case where the user touches the touch panel. As illustrated in FIG. 28, in addition to the elastic object 420 having the initial circular shape, a set of icon images 510 and 520, which are arranged so as to be spaced apart from the elastic object 420 and in which "SKILL" is written, and elastic objects 610 and 620 having substantially elliptic shapes, which are formed so as to include the icon images 510 and 520, respectively, are superimposed as the user interface image.

The user interface image is operated by the icon image forming unit 920 so as to appear when, for example, a contact state of the finger of the user is continued for a fixed period of time (that is, the user presses and holds on the touch panel). In a state in which the user interface image is displayed, when the user conducts a slide operation with the finger, it is possible to execute the action of moving the character based on the slide operation while deforming the elastic object 420 as in Game Application Example 1.

Subsequently, when the icon selection determination unit 930 determines that there is a slide operation for selecting the icon image 510 or 520, the character control unit 910 interrupts the moving action of the character, and executes the selected "SKILL" icon. Specifically, it is determined whether or not a slide contact end point on the touch panel is in the arrangement position of the icon image, and when the slide contact end point is in the arrangement position, a character action associated with the "SKILL" icon is executed. Note that, the "SKILL" used herein represents a character action associated with the icon image 510 or 520, and can be, for example, one of attacking actions to be made by the game character within the game. During the moving action of the character based on the slide operation, the icon images 510 and 520 are continuously displayed unless the state of contact with the touch panel is released.

That is, it is possible to cause the character to make a moving action within the virtual space while constantly maintaining a state capable of executing the "SKILL" (this movement is hereinafter referred to as "run-up movement"; specific processing thereof is described later). Note that, according to this application example of FIG. 28, two "SKILL" icons (510 and 520) are radially arranged in upper left and upper right distant positions in the periphery of the elastic object 420. However, it should be understood that no limitations are imposed on the positions and the numbers of those icons. For example, this may apply to four kinds of "SKILL" arranged not only in the upper left and upper right positions but also in lower left and lower right positions.

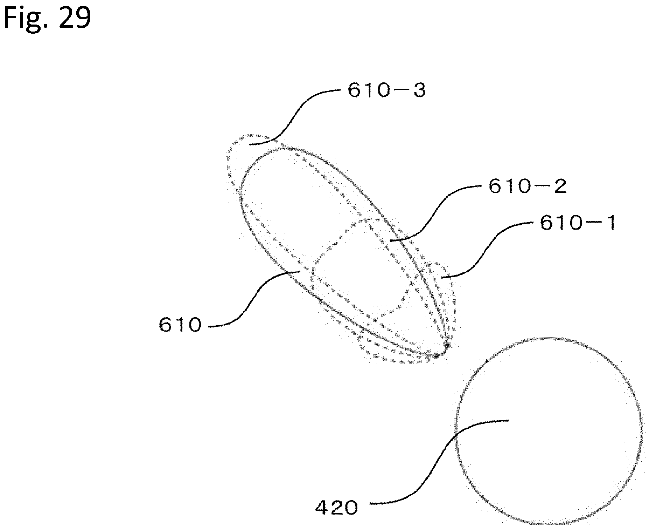

The elastic object 610 and 620 behave so as to form substantially elliptic shapes as objects that can be elastically deformed as illustrated in FIG. 29. Specifically, when the finger of the user comes into contact with the touch panel and the contact is maintained for a fixed period of time, the elastic object 610 undergoes a stepwise elastic deformation including a shape 610-1, a shape 610-2, and a shape 610-3 indicated by the dotted lines, and finally becomes a shape denoted by reference numeral 610 and indicated by the solid line. By conducting such display as to exert a pop-up feel, it is possible to present a special feel about the operation. Note that, the elastic body objects 610 and 620 can also be formed by the icon image forming unit 920 by gradually stretching the initial shape toward the icon image in the same manner as in the various Examples described above. Further, in FIG. 29, only the elastic object 610 is illustrated for the sake of brevity, but the same applies to the elastic object 620.

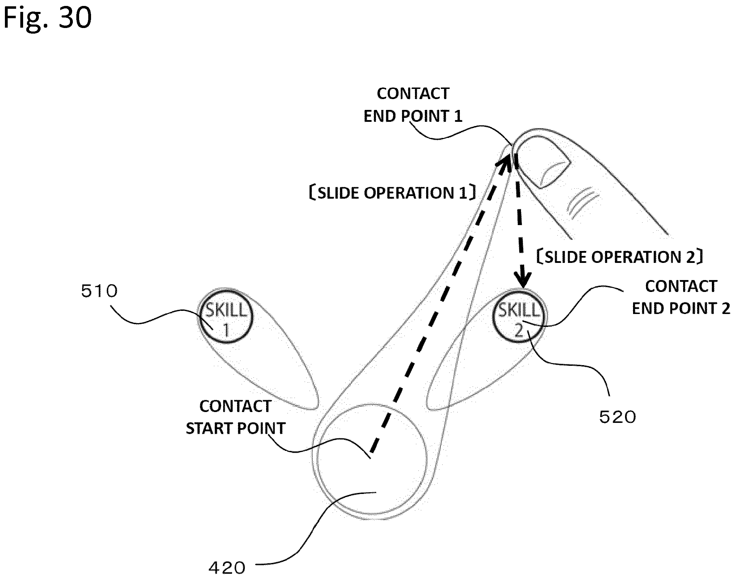

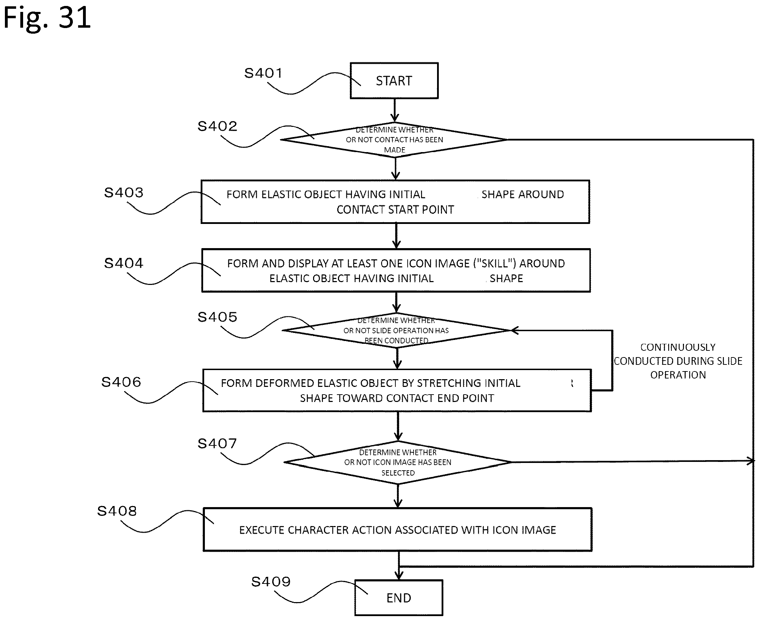

The above-mentioned run-up movement processing is described below with reference to a schematic diagram of FIG. 30 and a flowchart of FIG. 31. FIG. 30 is a schematic diagram for illustrating the run-up movement of the game character. In this case, such a scenario is assumed that the user presses and holds the contact start point on the touch panel, then conducts a slide operation up to the contact end point 1 (slide operation 1), and is about to further conduct a slide operation up to the contact end point 2. As illustrated in FIG. 30, as the user interface image, both the elastic object 420 and the "SKILL" icon images 510 and 520 are displayed. Even after the slide operation 1, when the user further conducts the slide operation 2 up to the "SKILL2" icon 520 without lifting the finger, the "SKILL2" action is enabled.

By conducting this application example, it is enabled to execute an action for causing a character to move within the virtual space while constantly maintaining the state capable of executing "SKILL". In particular, in a smartphone game that requires a high operation speed, enabling the execution of two actions with a continuous slide operation leads to an improvement in usability thereof.

With reference to the flowchart of FIG. 31, details of the run-up movement processing is described. In FIG. 31, for the sake of brevity, no consideration is given to the display processing for the elastic objects 610 and 620. The run-up movement processing is started in Step S401, and in Step S402, the contact determination unit 810 determines whether or not contact has been made on the touch panel. When it is determined that contact has been made with a physical body (finger), the procedure advances to Step S403, and the initial-shape object forming unit 820 forms an elastic object having an initial circular shape around the contact start point (see also FIGS. 10). At the same time, for example, when the contact state is continued for a fixed period of time (the user presses and holds), the procedure further advances to Step S404, and the icon image forming unit 920 radially generates and displays at least one icon image ("SKILL" icon) around the elastic object having the initial circular shape, which is formed in Step S403.

Subsequently, in Step S405, the slide operation determination unit 830 determines whether or not a slide operation has been conducted on the touch panel with the physical body. When it is determined that a slide operation has been conducted, the procedure advances to Step S406, and the polygon direction adjustment unit 840 and the deformed-object forming unit 850 stretch the initial circular shape toward the contact end point 1, to thereby form a deformed elastic object. Step S406 is continuously conducted during the slide operation. When the slide operation is finished (contact end point 2), the procedure subsequently advances to Step S407, and the icon selection determination unit 930 determines whether or not the contact end point 2 of the slide operation corresponds to the arrangement position of the icon image. When it is determined that a slide operation has been conducted from the contact end point 1 to the contact end point 2 (Step S405), and when it is determined that the contact end point 2 corresponds to the arrangement position of the icon image (Step S407), the procedure advances to Step S408, and the character control unit 910 executes the character action "SKILL" associated with the icon image. Finally, the procedure advances to Step S409 to bring the run-up movement processing to an end.

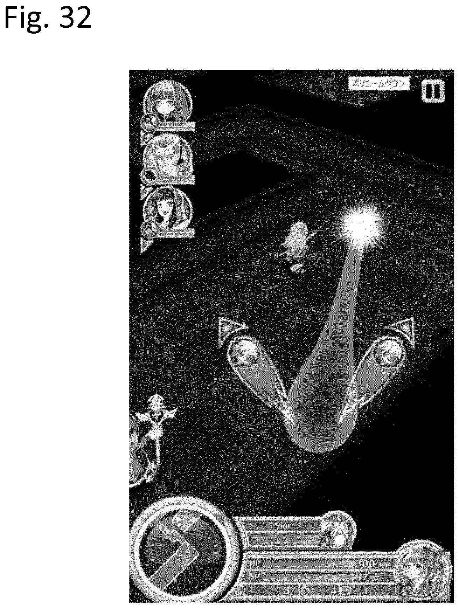

FIG. 32 is an illustration of a game screen example of the case where the game program including the user interface program that implements the run-up movement processing is executed. In FIG. 32, the user interface of FIG. 30 is superimposed on the game screen. An icon image of a sword is displayed on the "SKILL" icon portion of FIG. 30, and when selected, enables a powerful attack using a specific weapon. In this screen example, as the run-up movement, it is enabled to move the game character based on the elastic object while keeping displaying the icon image. In this respect, in consideration of usability of the user who conducts an operation, it is desired to set the moving speed of the game character somewhat slower in a mode of displaying the icon image together than otherwise.

The elastic object displayed by the user interface program according to the present invention is configured to associate the amount of a slide operation conducted by the user (that is, moving distance of the finger on the touch panel) and the moving distance of a game character with each other. Therefore, when the elastic object is displayed, it becomes easy to recognize a magnitude (moving distance) of the movement instruction issued to the game character in a physically sensed manner. Further, it becomes easy to recognize a controller that is liable to be hidden by the finger, such as a related-art virtual joystick (see FIG. 1). In addition, the elastic object is displayed together with the icon image, to thereby be able to improve the usability in the smartphone game that requires a high operation speed.

The user interface program for deforming and displaying the shape of the elastic object on the touch panel of the mobile terminal and the game program to be used for the game configured so that the action of the character within the virtual space is controlled and displayed based on the operation conducted on the touch panel of the mobile terminal, according to the embodiment of the present invention, have been described along with the various Examples and game application examples. The above-mentioned embodiment is merely an example for facilitating an understanding of the present invention, and does not serve to limit an interpretation of the present invention. It should be understood that the present invention can be changed and modified without departing from the gist of the invention, and that the present invention includes equivalents thereof.

Drawings

FIG. 1

(1)    BEFORE OPERATION
(2)    AFTER OPERATION

FIG. 2

(1)    IN OPERATION
(2)    AFTER OPERATION

FIG. 4

4    MAIN MEMORY
5    AUXILIARY MEMORY
6    TRANSMITTER/RECEIVER UNIT
7    DISPLAY UNIT
8    INPUT UNIT

FIG. 5

2    TOUCH PANEL
301    TOUCH SENSING UNIT
302    LIQUID CRYSTAL DISPLAY UNIT
303    CONTROL UNIT
(1)    DISPLAY SIGNAL
(2)    OPERATION SIGNAL

FIG. 9

800    USER OPERATION UNIT

810    CONTACT DETERMINATION UNIT

820    INITIAL-SHAPE OBJECT FORMING UNIT

830    SLIDE OPERATION DETERMINATION UNIT

840    POLYGON DIRECTION ADJUSTMENT UNIT

850    DEFORMED-OBJECT FORMING UNIT

860    NON-CONTACT DETERMINATION UNIT

870    RESTORED-OBJECT FORMING UNIT

900    CHARACTER OPERATION UNIT

910    CHARACTER CONTROL UNIT

920    ICON IMAGE FORMING UNIT

930    ICON SELECTION DETERMINATION UNIT

(1)    INPUT

(2)    OUTPUT

FIG. 10(a)

750    USER INTERFACE IMAGE

FIG. 10(b)

710   MESH

FIG. 13

(1)   CONTACT END POINT
(2)   CONTACT START POINT

FIG. 14
SLIDE DIRECTION
FIGS. 15
SLIDE OPERATION DIRECTION
FIGS. 16
CONTACT END POINT
FIG. 17
ORIGIN
FIG. 18
S101 START
S102 DETERMINE WHETHER OR NOT CONTACT HAS BEEN MADE
S103 FORM ELASTIC OBJECT HAVING INITIAL CIRCULAR SHAPE AROUND CONTACT START POINT
S104 DETERMINE WHETHER OR NOT SLIDE OPERATION HAS BEEN CONDUCTED
S105 FORM DEFORMED ELASTIC OBJECT BY STRETCHING INITIAL CIRCULAR SHAPE TOWARD CONTACT END POINT
S106 END
FIG. 19
S201 CONDUCT ADJUSTMENT PROCESSING (ROTATION) SO THAT DIRECTION OF POLYGON DIVIDED INTO PLURALITY OF MESHES MATCHES MOVING DIRECTION OF PHYSICAL BODY
S202 DEFINE XY COORDINATE SYSTEM ON TOUCH PANEL SO THAT CONTACT START POINT IS SET AS ORIGIN AND THAT SLIDE OPERATION DIRECTION IS SET AS Y DIRECTION
S203 SET REFERENCE POINT (0,Ystd) ON LINE IN SLIDE OPERATION DIRECTION (Y DIRECTION) EXTENDING FROM CONTACT START POINT ON TOUCH PANEL
S204 DETERMINE POINTS P (x1,y1) OF PLURALITY OF MESHES STRETCHED TO CONTAIN ELASTIC OBJECT TO BE DEFORMED, WHICH CORRESPOND TO RESPECTIVE POINTS P (x0, y0) FORMING PLURALITY OF MESHES THAT CONTAIN ELASTIC OBJECT HAVING INITIAL CIRCULAR SHAPE, BY THE FOLLOWING MATHEMATICAL EXPRESSIONS

$$x1 = x0$$

$$y1 = y0 + L/R$$

(WHERE L REPRESENTS SLIDE OPERATION DISTANCE AND R REPRESENTS DISTANCE FROM REFERENCE POINT TO POINT (x0,y0))
FIG. 20(a)
ORIGIN
FIG. 20(b)
OVERLAPPING COLUMN
FIG. 21
S301 CONDUCT ADJUSTMENT PROCESSING (ROTATION) SO THAT DIRECTION OF POLYGON DIVIDED INTO PLURALITY OF MESHES MATCHES MOVING DIRECTION OF PHYSICAL BODY
S302 DEFINE XY COORDINATE SYSTEM ON TOUCH PANEL SO THAT CONTACT START POINT IS SET AS ORIGIN AND THAT SLIDE OPERATION DIRECTION IS SET AS Y DIRECTION
S303 DIVIDE ELASTIC OBJECT HAVING INITIAL CIRCULAR SHAPE INTO MESH REGIONS OF UPPER PORTION AND LOWER PORTION ALONG Y DIRECTION BASED ON REGIONS OF MESHES
S304 ENLARGE MESH REGION OF LOWER PORTION AROUND CONTACT START POINT BASED ON DISTANCE OF SLIDE OPERATION
S305 MOVE MESH REGION OF UPPER PORTION TO PERIPHERY OF CONTACT END POINT IN Y DIRECTION
S306 FORM DEFORMED ELASTIC OBJECT BY CONNECTING RESPECTIVE SEMI-CIRCUMFERENCES WITHIN MESH REGIONS OF ENLARGED UPPER PORTION AND MOVED LOWER PORTION TO EACH OTHER
FIG. 30

(1)   CONTACT END POINT
(2)   SLIDE OPERATION
(3)   CONTACT START POINT

FIG. 31
S401 START
S402 DETERMINE WHETHER OR NOT CONTACT HAS BEEN MADE
S403 FORM ELASTIC OBJECT HAVING INITIAL CIRCULAR SHAPE AROUND CONTACT START POINT
S404 FORM AND DISPLAY AT LEAST ONE ICON IMAGE ("SKILL") AROUND ELASTIC OBJECT HAVING INITIAL CIRCULAR SHAPE
S405 DETERMINE WHETHER OR NOT SLIDE OPERATION HAS BEEN CONDUCTED
S406 FORM DEFORMED ELASTIC OBJECT BY STRETCHING INITIAL CIRCULAR SHAPE TOWARD CONTACT END POINT
S407 DETERMINE WHETHER OR NOT ICON IMAGE HAS BEEN SELECTED
S408 EXECUTE CHARACTER ACTION ASSOCIATED WITH ICON IMAGE
S409 END
CONTINUOUSLY CONDUCTED DURING SLIDE OPERATION

**Reference Signs List:**

| | |
|---|---|
| 1 - | smartphone |
| 2 - | touch panel |
| 3 - | CPU |
| 4 - | main memory |
| 5 - | auxiliary memory |
| 6 - | transmitter/receiver unit |
| 7 - | display unit |
| 8 - | input unit |
| 301 - | touch sensing unit |
| 302 - | liquid crystal display unit |
| 303 - | control unit |
| 400 - | operation object |
| 410 - | fixed circle |
| 420 - | elastic object |
| 420a - | elastic object |
| 420b - | elastic object |
| 420c - | elastic object |
| 430 - | base portion |
| 440 - | connecting portion |
| 450 - | tip portion |
| 460 - | game character |
| 510 - | icon image |
| 520 - | icon image |
| 610 - | elastic object |
| 620 - | elastic object |
| 750 - | user interface image |
| 800 - | user operation unit |
| 810 - | contact determination unit |
| 820 - | initial-shape object forming unit |
| 830 - | slide operation determination unit |
| 840 - | polygon direction adjustment unit |
| 850 - | deformed-object forming unit |
| 860 - | non-contact determination unit |
| 870 - | restored-object forming unit |
| 900 - | character operation unit |
| 910 - | character control unit |
| 920 - | icon image forming unit |
| 930 - | icon selection determination unit |

**Claims**

1. A user interface program for deforming and displaying a shape of an elastic object on a touch panel of a mobile terminal, the user interface program causing the mobile terminal to function as:

a first formation unit configured to form and display a first elastic object having a circular shape around a first contact point on the touch panel;
a first determination unit configured to determine whether or not a slide operation has been conducted on the touch panel with a physical body; and
a second formation unit configured to form and display a second elastic object deformed by stretching the circular shape toward a second contact point when the first determination unit determines that a slide operation from the first contact point to the second contact point has been conducted,
the first elastic object being contained in a mesh region formed of a plurality of meshes,
the second formation unit being further configured to deform the circular shape of the first elastic object by stretching each of the plurality of meshes along a direction of the slide operation so that the mesh closer to the second contact point becomes progressively longer.

2. A user interface program according to claim 1, wherein:

the second elastic object formed by the second formation unit has a fixed width with respect to the direction of the slide operation; and
the fixed width is equal to or larger than a diameter of the circular shape of the first elastic object.

3. A user interface program according to claim 1 or 2, wherein the second formation unit is further configured to:

set a reference point on a line in the direction of the slide operation extending from the first contact point on the touch panel; and
deform the circular shape of the first elastic object by forming the plurality of stretched meshes that contain the second elastic object based on a distance of the slide operation and distances from the reference point to the plurality of meshes that contain the first elastic object.

4. A user interface program according to claim 3, wherein the second formation unit is further configured to:

define an XY coordinate system on the touch panel so that the first contact point is set as an origin and that the direction of the slide operation is set as a Y-axis direction; and
determine points $(x1,y1)$ of the plurality of meshes stretched to contain the second elastic object, which correspond to respective points $(x0,y0)$ forming the plurality of meshes that contain the first elastic object, by the following mathematical expressions:

$$x1=x0;$$

and

$$y1=y0+L/R,$$

where L represents a distance of the slide operation and R represents a distance from the reference point to each point (x0,y0).

5. A user interface program according to any one of claims 1 to 4, further causing the mobile terminal to function as a third formation unit configured to form and display a third elastic object by further deforming a shape of the second elastic object when the first determination unit further determines that a slide operation from the second contact point to the third contact point has been conducted, the third formation unit being further configured to:

> rotate the second elastic object by an angle between the second contact point and the third contact point with reference to the first contact point; and
> form and display the third elastic object by stretching a shape of the rotated second elastic object toward the third contact point.

6. A user interface program according to any one of claims 1 to 5, further causing the mobile terminal to function as:

> a second determination unit configured to determine whether or not the physical body has been lifted off the touch panel at the second contact point; and
> a fourth formation unit configured to restore and display the first elastic object by contracting the deformed second elastic object toward the first contact point stepwise when the second determination unit determines that the physical body has been lifted off the touch panel at the second contact point.

7. A user interface program for deforming and displaying a shape of an elastic object on a touch panel of a mobile terminal, the user interface program causing the mobile terminal to function as:

> a first formation unit configured to form and display a first elastic object having a circular shape around a first contact point on the touch panel;
> a first determination unit configured to determine whether or not a slide operation has been conducted on the touch panel; and
> a second formation unit configured to form and display a second elastic object deformed by stretching the circular shape toward a second contact point when the first determination unit determines that a slide operation from the first contact point to the second contact point has been conducted,
> the first elastic object being contained in a mesh region formed of a plurality of meshes,
> the second formation unit being further configured to:

> > divide the first elastic object into a first portion and a second portion based on the mesh region;
> > enlarge the first portion around the first contact point based on a distance of the slide operation;
> > move the second portion to a periphery of the second contact point; and
> > form the deformed second elastic object formed of a curved shape by connecting the enlarged first portion and the moved second portion to each other with a curved line.

8. A user interface program according to claim 7, wherein the second formation unit is further configured to form the first portion and the second portion by dividing the circular shape into semicircles in a direction perpendicular to a direction of the slide operation.

9. A user interface program according to claim 7 or 8, wherein the second formation unit is further configured to enlarge the first portion in a direction of the slide operation and/or a direction perpendicular to the direction of the slide operation.

10. A user interface program according to any one of claims 7 to 9, wherein the second formation unit is further configured to enlarge the second portion to be moved based on the distance of the slide operation.

11. A user interface program according to claim 10, wherein the second formation unit is further configured to use an enlargement ratio of the second portion to be moved, which is smaller than an enlargement ratio of the first portion.

12. A user interface program according to any one of claims 7 to 11, further causing the mobile terminal to function as a third formation unit configured to form and display a third elastic object by further deforming a shape of the second elastic object when the first determination unit further determines that a slide operation from the second contact point to the third contact point has been conducted,

the third formation unit being further configured to:

rotate the second elastic object by an angle between the second contact point and the third contact point with reference to the first contact point; and

form and display the third elastic object by stretching a shape of the rotated second elastic object from the second contact point to the third contact point.

13. A user interface program according to any one of claims 7 to 12, further

causing the mobile terminal to function as:

a second determination unit configured to determine whether or not the physical body has been lifted off the touch panel at the second contact point;

and

a fourth formation unit configured to restore and display the first elastic object by contracting the deformed second elastic object toward the first contact point stepwise when the second determination unit determines that the physical body has been lifted off the touch panel at the second contact point.

14. A game program to be used for a game configured so that an action of a

character within a virtual space is controlled and displayed based on an operation conducted on a touch panel of a mobile terminal, the game program causing the mobile terminal to function as:

a first formation unit configured to form and display a first elastic object having a circular shape around a first contact point on the touch panel;

a first determination unit configured to determine whether or not a slide operation has been conducted on the touch panel;

a second formation unit configured to form and display a second elastic object deformed by stretching the circular shape toward a second contact point when the first determination unit determines that a slide operation from the first contact point to the second contact point has been conducted,

the first elastic object being contained in a mesh region formed of a plurality of meshes,

the second formation unit being further configured to deform the circular shape of the first elastic object by stretching each of the plurality of meshes along a direction of the slide operation so that the mesh closer to the second contact point becomes progressively longer; and

a character control unit configured to execute a first character action based on the direction of the slide operation in response to the slide operation, and to display the character action together with the formed second elastic object.

15. A game program according to claim 14, further causing the mobile terminal to function as a third formation unit configured to form and display a third elastic object by further deforming a shape of the second elastic object when the first determination unit further determines that a slide operation from the second contact point to the third contact point has been conducted,

the third formation unit being further configured to:

rotate the second elastic object by an angle between the second contact point and the third contact point with reference to the first contact point; and

form the third elastic object by stretching a shape of the rotated second elastic object toward the third contact point.

16. A game program according to claim 15, further causing the mobile terminal to function as a fourth formation unit configured to generate and display, when the first formation unit forms the first elastic object having the circular shape, at least one icon image further around the first elastic object.

17. A game program according to claim 16, further causing the mobile terminal to function as a second determination unit configured to determine whether or not a contact point on the touch panel corresponds to an arrangement position of the at least one icon image,

wherein the character control unit is further configured to execute a second character action associated with the at least one icon image when the first determination unit determines that the slide operation from the second contact point to the third contact point has been conducted and when the second determination unit determines that the third contact point corresponds to the arrangement position of the at least one icon image.

## Fig. 1

BEFORE OPERATION                    AFTER OPERATION

PRIOR ART

EP 3 128 408 A1

# Fig. 2

IN OPERATION 1    IN OPERATION 2    AFTER OPERATION

PRIOR ART

EP 3 128 408 A1

Fig. 3

Fig. 4

Fig. 5

| | |
|---|---|
| 301 | TOUCH SENSING UNIT |
| 302 | LIQUID CRYSTAL DISPLAY UNIT |

TOUCH PANEL 2

DISPLAY SIGNAL    OPERATION SIGNAL

| | |
|---|---|
| 303 | CONTROL UNIT |

EP 3 128 408 A1

Fig. 6

400

410

420(430)

Fig. 7

Fig. 8

## Fig. 9

USER OPERATION UNIT 800

CONTACT DETERMINATION UNIT 810

INITIAL-SHAPE OBJECT FORMING UNIT 820

SLIDE OPERATION DETERMINATION UNIT 830

POLYGON DIRECTION ADJUSTMENT UNIT 840

DEFORMED-OBJECT FORMING UNIT 850

NON-CONTACT DETERMINATION UNIT 860

RESTORED-OBJECT FORMING UNIT 870

INPUT

OUTPUT

CHARACTER OPERATION UNIT 900

CHARACTER CONTROL UNIT 910

ICON IMAGE FORMING UNIT 920

ICON SELECTION DETERMINATION UNIT 930

26

## Fig. 10

USER INTERFACE IMAGE
750

760

770

（a）

MESH
710

（b）

Fig. 11

EP 3 128 408 A1

EP 3 128 408 A1

Fig. 12

Fig. 13

Fig. 14

SLIDE DIRECTION

#1···
#2···
#3···
#4···

#1···
#2···
#3···
#4···

y
x

Fig. 15

(SLIDE OPERATION DIRECTION)

W          W          W
(a)        (b)        (c)

EP 3 128 408 A1

32

Fig. 16

(CONTACT END POINT 1)

420a'

#1···

#2···

#3···

#4···

(a)

(CONTACT END POINT 2)

420a''

#1···

#2···

#3···

#4···

θ

(b)

EP 3 128 408 A1

Fig. 17

EP 3 128 408 A1

## Fig. 18

S101 → START

S102 → DETERMINE WHETHER OR NOT CONTACT HAS BEEN MADE

S103 → FORM ELASTIC OBJECT HAVING INITIAL SHAPE AROUND CONTACT START POINT

S104 → DETERMINE WHETHER OR NOT SLIDE OPERATION HAS BEEN CONDUCTED

S105 → FORM DEFORMED ELASTIC OBJECT BY STRETCHING INITIAL SHAPE TOWARD CONTACT END POINT

S106 → END

## Fig. 19

S201 — CONDUCT ADJUSTMENT PROCESSING (ROTATION) SO THAT DIRECTION OF POLYGON DIVIDED INTO PLURALITY OF MESHES MATCHES MOVING DIRECTION OF PHYSICAL BODY

S202 — DEFINE XY COORDINATE SYSTEM ON TOUCH PANEL SO THAT CONTACT START POINT IS SET AS ORIGIN AND THAT SLIDE OPERATION DIRECTION IS SET AS Y DIRECTION

S203 — SET REFERENCE POINT (0,Ystd) ON LINE IN SLIDE OPERATION DIRECTION (Y DIRECTION) EXTENDING FROM CONTACT START POINT ON TOUCH PANEL

S204 — DETERMINE POINTS P (x1,y1) OF PLURALITY OF MESHES STRETCHED TO CONTAIN ELASTIC OBJECT TO BE DEFORMED, WHICH CORRESPOND TO RESPECTIVE POINTS P (x0,y0) FORMING PLURALITY OF MESHES THAT CONTAIN ELASTIC OBJECT HAVING INITIAL ☽ SHAPE, BY THE FOLLOWING MATHEMATICAL EXPRESSIONS

$$x1=x0$$
$$y1=y0+L/R$$

(WHERE L REPRESENTS SLIDE OPERATION DISTANCE AND R REPRESENTS DISTANCE FROM REFERENCE POINT TO POINT (x0,y0))

Fig. 20

(ORIGIN)

OVERLAPPING
COLUMN

420c

420c'

L

Y

X

(a)        (b)        (c)

# Fig. 21

EP 3 128 408 A1

S301 — CONDUCT ADJUSTMENT PROCESSING (ROTATION) SO THAT DIRECTION OF POLYGON DIVIDED INTO PLURALITY OF MESHES MATCHES MOVING DIRECTION OF PHYSICAL BODY

S302 — DEFINE XY COORDINATE SYSTEM ON TOUCH PANEL SO THAT CONTACT START POINT IS SET AS ORIGIN AND THAT SLIDE OPERATION DIRECTION IS SET AS Y DIRECTION

S303 — DIVIDE ELASTIC OBJECT HAVING INITIAL SHAPE INTO MESH REGIONS OF UPPER PORTION AND LOWER PORTION ALONG Y DIRECTION BASED ON REGIONS OF MESHES

S304 — ENLARGE MESH REGION OF LOWER PORTION AROUND CONTACT START POINT BASED ON DISTANCE OF SLIDE OPERATION

S305 — MOVE MESH REGION OF UPPER PORTION TO PERIPHERY OF CONTACT END POINT IN Y DIRECTION

S306 — FORM DEFORMED ELASTIC OBJECT BY CONNECTING RESPECTIVE SEMI-CIRCUMFERENCES WITHIN MESH REGIONS OF ENLARGED LOWER PORTION AND MOVED UPPER PORTION TO EACH OTHER

Fig. 22

Fig. 23

420d

Fig. 24

Fig. 25

# Fig. 26

420'

Fig. 27

Fig. 28

EP 3 128 408 A1

Fig. 29

# Fig. 30

CONTACT
END POINT 1

[SLIDE OPERATION 1]

[SLIDE OPERATION 2]

CONTACT
END POINT 2

510

SKILL 1

SKILL 2

520

CONTACT
START POINT

420

EP 3 128 408 A1

# Fig. 31

S401 — START

S402 — DETERMINE WHETHER OR NOT CONTACT HAS BEEN MADE

S403 — FORM ELASTIC OBJECT HAVING INITIAL SHAPE AROUND CONTACT START POINT

S404 — FORM AND DISPLAY AT LEAST ONE ICON IMAGE ("SKILL") AROUND ELASTIC OBJECT HAVING INITIAL SHAPE

S405 — DETERMINE WHETHER OR NOT SLIDE OPERATION HAS BEEN CONDUCTED

S406 — FORM DEFORMED ELASTIC OBJECT BY STRETCHING INITIAL SHAPE TOWARD CONTACT END POINT

CONTINUOUSLY CONDUCTED DURING SLIDE OPERATION

S407 — DETERMINE WHETHER OR NOT ICON IMAGE HAS BEEN SELECTED

S408 — EXECUTE CHARACTER ACTION ASSOCIATED WITH ICON IMAGE

S409 — END

Fig. 32

## INTERNATIONAL SEARCH REPORT

| International application No. |
| --- |
| PCT/JP2015/054783 |

**A.   CLASSIFICATION OF SUBJECT MATTER**
*G06F3/0488(2013.01)i, A63F13/2145(2014.01)i, A63F13/52(2014.01)i, G06F3/0481(2013.01)i*

According to International Patent Classification (IPC) or to both national classification and IPC

**B.   FIELDS SEARCHED**

Minimum documentation searched (classification system followed by classification symbols)
G06F3/0488, A63F13/2145, A63F13/52, G06F3/0481

Documentation searched other than minimum documentation to the extent that such documents are included in the fields searched
Jitsuyo Shinan Koho            1922-1996   Jitsuyo Shinan Toroku Koho   1996-2015
Kokai Jitsuyo Shinan Koho    1971-2015   Toroku Jitsuyo Shinan Koho    1994-2015

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2012-033060 A  (Sony Corp.),<br>16 February 2012 (16.02.2012),<br>paragraphs [0061] to [0062], [0066] to [0068],<br>[0078], [0528] to [0532]<br>& US 2012/0030636 A1      & EP 2413228 A2<br>& CN 102346640 A | 1-6,14-17<br>7-13 |
| Y<br>A | Katsuya IMURA, Illustrator CS4 Super-Reference<br>for Macintosh, 1st edition, Sotechsha Co., Ltd.,<br>28 February 2009 (28.02.2009), pages 242 to 243 | 1-6,14-17<br>7-13 |

☒   Further documents are listed in the continuation of Box C.            ☐   See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered    to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 April 2015 (17.04.15) | 28 April 2015 (28.04.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
| --- | --- |

Form PCT/ISA/210 (second sheet) (July 2009)

# EP 3 128 408 A1

## INTERNATIONAL SEARCH REPORT

| International application No. |
|---|
| PCT/JP2015/054783 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2008-295970 A  (Konami Digital Entertainment Co., Ltd.),<br>11 December 2008 (11.12.2008),<br>paragraphs [0076] to [0077]; fig. 15 to 16<br>& US 2010/0240453 A1    & WO 2008/149575 A1<br>& EP 2163283 A1        & KR 10-2009-0079974 A<br>& CN 101657243 A        & TW 200848130 A | 1-6,14-17<br>7-13 |
| Y | JP 2006-181286 A  (Sega Corp.),<br>13 July 2006 (13.07.2006),<br>abstract<br>(Family: none) | 14-17 |
| Y | JP 2010-088641 A  (Namco Bandai Games Inc.),<br>22 April 2010 (22.04.2010),<br>paragraphs [0038] to [0050]<br>(Family: none) | 14-17 |
| Y | WO 2009/044770 A1  (ACCESS Co., Ltd.),<br>09 April 2009 (09.04.2009),<br>paragraphs [0083], [0086]<br>& US 2010/0275150 A1    & KR 10-2010-0063769 A<br>& CN 101809531 A | 16-17 |
| A | JP 2006-031715 A  (Solidworks Corp.),<br>02 February 2006 (02.02.2006),<br>entire text; all drawings<br>& US 2006/0017723 A1    & EP 1622086 A1 | 1-17 |
| A | JP 2001-291118 A  (Sony Corp.),<br>19 October 2001 (19.10.2001),<br>entire text; all drawings<br>(Family: none) | 1-17 |
| A | JP 2009-240620 A  (Sega Corp.),<br>22 October 2009 (22.10.2009),<br>entire text; all drawings<br>(Family: none) | 1-17 |

Form PCT/ISA/210 (continuation of second sheet) (July 2009)

51

**EP 3 128 408 A1**

## REFERENCES CITED IN THE DESCRIPTION

### Patent documents cited in the description

- JP 2012168931 A
- JP 2012033060 A